# EUROPEAN PATENT APPLICATION

(11) **EP 4 797 071 A1**
(43) Date of publication of application: **26.08.2026**
(21) Application number: 26159536.7
(22) Date of filing: 19.02.2026
(51) Int. Cl.: G06F 7/544

(54) **SYSTEM AND METHOD FOR ADAPTIVE COMPUTATIONAL HARDWARE WITH DYNAMIC RECONFIGURATION FOR FUNCTION APPROXIMATION**

(30) Priority: 19.02.2025 US 202519057696; 26.01.2026 US 202619458990
(71) Applicant: Next Silicon Ltd, 5348303 Givatayim (IL)
(72) Inventor: KHANKIN, Daniel, 8463346 Beer Sheva (IL); ABADI, Aharon, 4951939 Petach-Tikva (IL)
(74) Representative: Ipsilon

(57) **Abstract**

A system for executing computer instructions, comprising: a configurable lookup table (LUT); a configurable polynomial approximation circuit; and a processing circuitry, configured to: in each optimization iteration: calculate complexity values representing variation in computational behavior of a code sequence implementing computer instructions at regions along an approximation interval of input values; determine an optimal configuration that includes a number of entries of the LUT, lengths of unique segments within the approximation interval, and polynomial values of a polynomial approximation function, wherein the optimal configuration is based on the complexity values and computational resource constraint(s); reconfigure the LUT and the configurable polynomial approximation circuit to implement the optimal configuration; and in each computation iteration when executing the computer instructions: compute, using the configurable LUT and the configurable polynomial approximation circuit, an output value Y₁ of the code sequence applied to an input value X₁, wherein X₁ is within the approximation interval.

## Description

### FIELD OF THE INVENTION

The present invention relates generally to computational systems. More specifically, the present invention relates to a system, a method, a device (e.g., an Integrated Circuit (IC) or a reconfigurable processing grid), and method of configuring a reconfigurable device, for efficiently computing an output value of a code sequence. The code sequence may implement, but is not limited to implementing, a mathematical function.

### BACKGROUND OF THE INVENTION

In modern computational systems, the efficient and accurate computation of mathematical functions is important for a wide range of applications, such as scientific computing, signal processing, and machine learning. Traditional methods for computing these functions often rely on iterative algorithms or direct evaluation, which can be computationally intensive and time-consuming.

One common approach for improving computational efficiency is the use of Look-Up Tables (LUTs), where precomputed values of a function are stored and retrieved as needed. However, the accuracy of LUT-based methods is limited by the granularity of the stored values and the size of the LUT, which can lead to significant memory usage and potential inaccuracies due to interpolation errors.

While LUT-based approximation techniques have been extensively applied to mathematical function evaluation, the underlying principles extend to a broader class of computational operations. Any computational process that exhibits deterministic input-output relationships and requires repeated evaluation across a defined input domain can benefit from LUT-based acceleration. Such operations include, but are not limited to, data transformations in digital signal processing, activation functions in neural network inference, color space conversions in image processing, and complex algorithmic computations in real-time control systems. As with using an LUT-based method for improving computation efficiency of a mathematical function, also with other computational operations being approximated there is a need to balance approximation accuracy against memory consumption and computational overhead while maintaining acceptable performance across varying input characteristics.

### SUMMARY OF THE INVENTION

While the detailed description below focuses on mathematical function approximation as illustrative examples, the principles and techniques described herein are applicable to various computational operations that can benefit from LUT-based acceleration with polynomial correction.

To address these challenges, embodiments of the present invention introduce a novel LUT-based method for approximating a computation of a code sequence, for example function approximation, that combines precomputed values with polynomial approximations. This method allows for efficient and accurate computation of mathematical functions, or other computations, over arbitrary intervals, both finite and infinite, by leveraging a known interval for precomputation, and a mapping function to handle arbitrary input values.

According to some embodiments of the present invention, a system may be configured to perform multiple optimization and reconfiguration cycles during the operational lifetime of the system. In each optimization cycle, the system may analyze computational characteristics of the code sequence being executed, determine an optimal configuration for one or more LUTs, and additionally or alternatively one or more polynomial circuits, based on current operational requirements and resource constraints, may reconfigure the LUT(s) and additionally or alternatively the polynomial circuit(s) to implement the determined optimal configuration, and may then execute multiple computational operations using the reconfigured circuits. This iterative approach enables the system to dynamically adapt to changing computational requirements, input value ranges, accuracy requirements, and resource availability throughout the lifetime of the integrated circuit, providing enhanced flexibility and efficiency compared to static approximation systems.

The iterative optimization process may include calculating complexity values that represent variation in computational behavior of the code sequence across different regions of the approximation interval. Based on these complexity values and computational resource constraints (such as logic area and memory area limitations of the integrated circuit), the system may determine an optimal configuration specifying the number of LUT entries, the lengths of segments within the approximation interval, and polynomial parameters for the polynomial circuit(s). The system may then reconfigure the LUT circuit(s) and polynomial circuit(s) by modifying circuit parameters including LUT entry counts, segment boundary definitions, polynomial coefficient values, and polynomial degrees. Following reconfiguration, the system may execute the computer instructions using the reconfigured circuits to compute output values, with this process repeating as operational conditions change, thereby enabling continuous optimization throughout the integrated circuit's operational lifetime.

The configurable nature of the LUT circuit(s) and polynomial circuit(s) enables runtime adaptation to varying computational demands. For example, when the system detects changes in the range of input values being processed, and additionally or alternatively changes in required approximation accuracy, and additionally or alternatively changes in available computational resources, detection of these changes may trigger a new optimization cycle. During this cycle, the system may recalculate optimal segment lengths, determine appropriate LUT depth, or adjust polynomial complexity to match current requirements, or any combination thereof. This dynamic reconfiguration capability is particularly advantageous in applications where computational requirements vary over time, such as in adaptive signal processing systems, machine learning inference engines with varying precision requirements, or multi-mode computational systems that handle different computations or accuracy levels depending on operational context.

In some embodiments of the present invention the system comprises a reconfigurable processing grid, comprising a plurality of reconfigurable logical elements connected by a plurality of configurable data routing junctions. An example of a reconfigurable logical element is processing circuitry that may be configured to perform a computational operation, for example a mathematical operation or a logical operation. Some examples of a mathematical operation are addition, subtraction and multiplication. Some examples of a logical operation are a logical NOT operation, a logical AND operation, a binwise NOT operation and a shift operation. A logical element may be configured to perform a polynomial computation element. The LUT may be implemented in the reconfigurable processing grid. Modifying the LUT, for example modifying the number of LUT entries may comprise manipulating at least some of the plurality of reconfigurable logical elements, manipulating at least some of the plurality of reconfigurable data routing junctions, reconfiguring the place and route of at least some logical elements of the LUT with respect to the plurality of reconfigurable logical elements, or any combination thereof. Additionally or alternatively, the configurable polynomial circuit may be implemented in the reconfigurable grid. Modifying a polynomial processing element of the configurable polynomial circuit may comprise manipulating at least some other of the plurality of reconfigurable logical elements and additionally or alternatively manipulating at least some other of the plurality of reconfigurable data routing junctions.

Although the following embodiments are described primarily in the context of approximating mathematical functions for (example logarithmic, exponential, and trigonometric functions), the described techniques for complexity-based segmentation, LUT optimization, and polynomial correction are similarly applicable to other computational operations implemented in hardware or software that exhibit input-output relationships amenable to approximation. Features described in the context of approximating a mathematical function may be applicable to approximating an outcome of computing a code sequence implementing other computational operations.

In some embodiments of the invention the code sequence may implement a mathematical function.

Embodiments of the invention may subdivide the given interval into subintervals, and store endpoint values of the computation for each sub-interval, for example endpoint values of the mathematical function in some embodiments where the code sequence implements a mathematical function. Embodiments of the invention may then apply a mapping operator to compute the sub-interval index and offset. By using a combination of LUT entries and polynomial approximations, embodiments of the invention may achieve high accuracy while minimizing memory usage and computational overhead.

Embodiments of the invention may also include an embedded hardware solution, such as an integrated circuit (IC), for implementing this method of efficient function approximation. The IC may leverage LUT and polynomial approximation circuits to deliver fast and accurate results, making it suitable for a wide range of applications where computational efficiency, storage space and computation accuracy are critical. Herewithin the term "polynomial computation circuitry" is used to mean "polynomial approximation circuit" and the terms are used interchangeably.

Embodiments of the invention may further include a method for designing, and optionally generating such an IC for efficient function approximation.

Overall, the present invention offers a practical application, and provides significant advancement in the technological field of computational systems, facilitating a robust and efficient method for approximating a computation, for example a mathematical function, with high accuracy and low resource consumption.

Embodiments of the invention may include a method of computing an output value Y₁ of a code sequence implementing a plurality of computer instructions (for example a mathematical function) by at least one processor. The at least one processor may be configured to obtain a query for computing the output value Y₁ for a given input value X₁, where X₁ may be within an approximation interval I₁.

The at least one processor may obtain a look-up table (LUT) that may include a plurality of entries, corresponding to a respective plurality of unique segments of the approximation interval I₁. Additionally, or alternatively, the at least one processor may obtain at least one polynomial representing an approximation of the computational behavior of the code sequence in a respective reference segment of the plurality of segments. When the code sequence implements a mathematical function, the at least one polynomial may represent an approximation of the mathematical function in a respective reference segment of the plurality of segments.

The at least one processor may select a segment of the plurality of segments based on the input value X₁, and retrieve from the LUT a preliminary approximation of the output value Y₁, based on that selection.

The at least one processor may subsequently calculate an offset value of the input value X₁ within the selected segment, and apply the at least one polynomial on the offset value, to obtain a correction value. The at least one processor may proceed to compute the output value Y₁ based on the preliminary approximation and the correction value, as elaborated herein.

According to some embodiments, a length of at least one first segment of the plurality of segments, and a length of at least one second segment of the plurality of segments may be unequal, or uneven.

According to some embodiments, for example in some embodiments where the code sequence implements a mathematical function, the at least one processor may receive at least one accuracy requirement, and define a maximal value of an error metric for approximating the mathematical function. The at least one processor may receive at least one resource requirement, defining a constraint of computational resource in approximating the mathematical function. The at least one processor may determine the number of entries of the LUT based on the at least one accuracy requirement and the at least one resource requirement. The at least one processor may subsequently calculate, for each entry of the LUT, a value of output Y₁ at the corresponding segment, thereby producing, or obtaining the content of the LUT.

According to some embodiments, the at least one processor may calculate a complexity value, representing variation in computational behavior of the code sequence (e.g., curvature, rapid changes, or inflection points) at one or more regions along the approximation interval I₁. Based on the complexity value, the at least one processor may determine a length of the one or more segments of the plurality of segments.

Additionally, or alternatively, the at least one processor may receive an accuracy requirement, defining a maximal value of an error metric for approximating the mathematical function within the reference segment.

Based on the accuracy requirement, the at least one processor may determine a minimal degree of the polynomial.

The at least one processor may apply an iterative algorithm or process to calculate the polynomial. For example, in some embodiments where the code sequence implements a mathematical function, each iteration of the process may include: (i) calculating the polynomial's accuracy in approximating the mathematical function within the reference segment, and (ii) increasing the polynomial degree, until the polynomial's approximation accuracy satisfies the accuracy requirement.

Additionally, or alternatively, in some embodiments where the code sequence implements a mathematical function, the at least one processor may receive at least one resource requirement, defining a constraint of computational resource in approximating the mathematical function within the reference segment, and increase the polynomial degree as long as the computational resource is satisfied.

According to some embodiments, the at least one processor may obtain the query for computing the output value Y₁ by receiving an initial query for calculating a target value Y₀ of the code sequence (for example a target value Y₀ of the mathematical function) at an arbitrary input value X₀, within an arbitrary interval I₀, and applying a range reduction algorithm on the arbitrary input value X₀, to calculate the input value X₁. As explained herein, input value X₁ may represent the initial, arbitrary input value X₀ within the approximation interval I₁.

Additionally, or alternatively, the at least one processor may apply a projection algorithm on the output value Y₁, to calculate the target value Y₀ of the code sequence at the initial, arbitrary input value X₀, and provide the target value Y₀ as a response to the initial query.

Embodiments of the invention may include a device, such as an electrical circuit, or an integrated circuit (IC) device, for computing an output value Y₁ of a mathematical function, for a given input value X₁ defined over an approximation interval I₁. According to some embodiments, the device may include a look-up table (LUT) circuit, having a plurality of entries, each corresponding to a respective segment of a plurality of segments of the approximation interval I₁. Additionally, or alternatively, the device may include a polynomial approximation circuit, configured to calculate a polynomial estimation of the mathematical function in a reference segment of the plurality of segments, and at least one processor.

As elaborated herein, the at least one processor may be configured to obtain a query for computing the output value Y₁, select a segment of the plurality of segments, based on the input value X₁, and retrieve, from the LUT, a preliminary approximation of the output value Y₁, based on the selected segment. The at least one processor may further calculate an offset of input value X₁ within the selected segment; employ the polynomial approximation circuit, to calculate a polynomial estimation of the mathematical function on the offset value, thereby obtain a correction value; and compute the output value Y₁ based on the preliminary approximation and the correction value.

According to some embodiments, the number of LUT entries may be determined based on (i) a required accuracy of the output value Y₁, and (ii) a computational resource (e.g., an area) constraint on the device.

Embodiments of the invention may further include a method of generating, or designing, by at least one processor, an IC for approximating an output value Y₁ of a mathematical function. According to some embodiments of the invention, the at least one processor may obtain a definition of the mathematical function over an approximation interval I₁. The processor may further receive (i) at least one resource requirement, defining a limitation of computational resources for computing the output value Y₁, and/or (ii) at least one accuracy requirement, defining a minimal value of an accuracy metric for approximating the output value Y₁.

Based on the at least one resource requirement, the processor may generate a LUT schematic, represent a LUT circuit that may include a plurality of entries. Each entry may (a) correspond to a respective, unique segment of the approximation interval I₁, and (b) be adapted to maintain at least one precalculated value of output Y₁ at the corresponding segment.

The at least one processor may generate a polynomial schematic, represent a polynomial circuit that may be adapted to calculate a polynomial estimation of the mathematical function in a reference segment of the plurality of segments, in accordance with the at least one accuracy requirement.

The at least one processor may further generate a processor schematic, represent at least one on-chip processor, adapted to be in communication with the LUT circuit and the polynomial circuit; and produce modules of instruction code, executable by the at least one on-chip processor. Upon execution of said modules of instruction code, the at least one on-chip processor may be configured to employ the LUT circuit and the polynomial circuit, so as to approximate the output value Y₁ of the mathematical function.

According to some embodiments, producing the modules of instruction code may include configuring the at least one on-chip processor to: obtain a query for computing the output value Y₁ for a given input value X₁ within interval I₁; calculate an index of a specific segment of the plurality of segments, based on the input value X₁; select the specific segment; and retrieve a preliminary approximation of the output value Y₁ from the LUT circuit, based on the selected segment.

Additionally, or alternatively, producing the modules of instruction code may include configuring the at least one on-chip processor to further: calculate an offset value of the input value X₁ within the selected segment; employ the polynomial circuit on the offset value, to obtain a correction value; and compute the output value Y₁ based on the preliminary approximation and the correction value.

The selected segment and reference segment may, or may not be the same segments of the plurality of segments. In other words, embodiments of the invention may use a polynomial, that was calculated for the reference segment, to approximate a correction value of a point that pertains to a different, selected segment.

The at least one processor may calculate the polynomial in an iterative process, where each iteration includes the following steps:

Calculating coefficients of an interim polynomial, having a degree pertaining to the current iteration, and adapted to approximate the mathematical function in said reference segment. This may be followed by computing an error value, representing the interim polynomial's approximation error in approximating the mathematical function. The iterative process may be repeated with an increased degree, until the approximation error value satisfies the accuracy requirement, to obtain a final version of the polynomial.

The at least one processor may generate the polynomial schematic to calculate the polynomial estimation of the mathematical function, based on the final version of the polynomial. The processor schematic, polynomial schematic, and LUT schematic may be adapted to be translated into a physical layout design, utilizable for fabricating said IC for approximating an output value of the mathematical function.

Embodiments of the invention may further include a system for executing computer instructions, comprising: a configurable lookup table (LUT); a configurable polynomial approximation circuit; and at least one processing circuitry, configured to: in each of a plurality of optimization iterations: calculate complexity values representing variation in computational behavior of a code sequence implementing a plurality of computer instructions at regions along an approximation interval I₁ of input values of the code sequence; determine an optimal configuration that includes a number of entries of the LUT, lengths of a plurality of unique segments within the approximation interval I₁, and polynomial values of a polynomial approximation function, wherein the optimal configuration is based on the complexity values and at least one computational resource constraint and wherein the lengths of respective segments are determined such that segments in regions having higher complexity values have shorter lengths than respective segments in regions having lower complexity values; reconfigure the configurable LUT and the configurable polynomial approximation circuit to implement the optimal configuration by modifying at least one of: a number of LUT entries associated with respective segments, and a polynomial processing element of the configurable polynomial approximation circuit; and in each of a plurality of computation iterations when executing the plurality of computer instructions: compute, using the configurable LUT and the configurable polynomial approximation circuit, an output value Y₁ of the code sequence applied to an input value X₁, wherein X₁ is within the approximation interval I₁.

According to some embodiments the at least one processing circuitry is further configured to, in each of the plurality of optimization iterations: identify a trigger for determining the optimal configuration. The trigger may comprise at least one of: identifying a change in a range of input values, receiving a polynomial representation precision requirement, receiving an accuracy requirement, and receiving a resource requirement. The at least one processing circuitry may be further configured to: collect a plurality of statistical values while executing the plurality of computation iterations in at least some of the plurality of optimization iterations; and identify a change in an arbitrary interval I₀ of input values of the code sequence.

Additionally, or alternatively, the at least one computational resource constraint may define limitations of at least one of logic area and memory area. A limitation of a logic area may define an amount of area of at least one of the configurable LUT and the configurable polynomial circuit. Additionally, or alternatively, a limitation of a memory area may define an amount of memory used by at least one of: the configurable LUT, the configurable polynomial circuit, and the processing circuitry when computing the output value Y₁.

According to some embodiments the system further comprises a reconfigurable processing grid comprising a plurality of reconfigurable logical elements connected by a plurality of reconfigurable data routing junctions. The configurable LUT may be implemented in the reconfigurable processing grid computing the output value Y₁ using the configurable LUT may comprise accessing the configurable LUT in the reconfigurable processing grid; and modifying the number of LUT entries associated with respective segments may comprise manipulating at least some of the plurality of reconfigurable logical elements and additionally or alternatively manipulating at least some of the plurality of reconfigurable data routing junctions.

Additionally, or alternatively, the configurable polynomial approximation circuit may be implemented in the reconfigurable processing grid; computing the output value Y₁ using the configurable polynomial approximation circuit may comprise accessing the configurable polynomial approximation circuit in the reconfigurable processing grid; and modifying the polynomial processing element of the configurable polynomial approximation circuit may comprise manipulating at least some other of the plurality of reconfigurable logical elements and additionally or alternatively manipulating at least some other of the plurality of reconfigurable data routing junctions.

Additionally, or alternatively, one or more of the at least one processing circuitries may be implemented in the reconfigurable processing grid; and computing the output value Y₁ may be by the one or more processing circuitries implemented in the reconfigurable processing grid are configured.

According to some embodiments, obtaining the query for computing the output value Y₁ may comprise: obtaining from the plurality of computer instructions an initial query for calculating a target output value Y₀ of the code sequence at an arbitrary input value X₀, within an arbitrary interval I₀; and applying a range reduction algorithm on the arbitrary input value X₀, to calculate the given input value X₁. The given input value X₁ may represent the arbitrary input value X₀ within the approximation interval I₁.

Additionally, or alternatively, the at least one processing circuitry may be further configured to: apply a projection algorithm on the output value Y₁, to calculate the target value Y₀ of computing the code sequence for the arbitrary input value X₀; and provide the target value Y₀ as a response to the initial query.

Additionally, or alternatively, determining the optimal configuration may further comprise: receiving at least one accuracy requirement, defining a maximal value of an error metric for approximating an outcome of executing the code sequence; receiving at least one resource requirement, defining a constraint of computational resource in approximating the outcome of executing the code sequence; determining the number of entries of the LUT based on the at least one accuracy requirement and the at least one resource requirement; and calculating, for each entry of the LUT, a value of output Y₁ for the corresponding segment.

According to some embodiments, the complexity values represent at least some of curvature, rapid changes, and inflection points of the computational behavior of the code sequence, and the determined segment lengths may achieve equal distribution of approximation error across all segments.

According to some embodiments, the system may further comprise: receiving an accuracy requirement, defining a maximal value of an error metric for approximating an outcome of executing the code sequence on input values within the reference segment; based on the accuracy requirement, determining a minimal degree of the polynomial; and applying an iterative process to calculate the polynomial, where each iteration includes: (i) calculating the polynomial's error in approximating the outcome of executing the code sequence on input values within the reference segment, and (ii) increasing the polynomial degree until the polynomial's approximation error satisfies the accuracy requirement. The system may further comprise: receiving at least one resource requirement, defining a constraint of computational resource in approximating the outcome of executing the code sequence on input values within the reference segment; and increasing the polynomial degree as long as the computational resource is satisfied.

According to some embodiments, the at least one polynomial may comprise a first polynomial, pertaining to a first reference segment and a second polynomial, pertaining to a second reference segment, and the at least one processing circuitry may be further configured to: calculate a first similarity value, representing similarity in behavior between the selected segment and the first reference segment; calculate a second similarity value, representing similarity in behavior between the selected segment and the second reference segment; choose a reference segment based on the first similarity value and the second similarity value; and calculate the correction value based on the polynomial pertaining to the chosen reference segment.

Embodiments of the invention may further include a method for executing computer instructions, comprising: in each of a plurality of optimization iterations: calculating complexity values representing variation in computational behavior of a code sequence implementing a plurality of computer instructions at regions along an approximation interval I₁ of input values of the code sequence; determining an optimal configuration that includes a number of entries of a configurable look-up table (LUT), lengths of a plurality of segments within the approximation interval I₁, and polynomial values of a polynomial approximation function, wherein the optimal configuration is based on the complexity values and at least one computational resource constraint and wherein the lengths of respective segments are determined such that segments in regions having higher complexity values have shorter lengths than respective segments in regions having lower complexity values; reconfiguring the configurable LUT and a configurable polynomial approximation circuit to implement the optimal configuration by modifying at least one of: a number of LUT entries associated with respective segments, and a polynomial processing element of the configurable polynomial approximation circuit; and in each of a plurality of computation iterations when executing the plurality of computer instructions: computing, using the configurable LUT and the configurable polynomial approximation circuit, an output value Y₁ of the code sequence applied to an input value X₁, wherein X₁ is within the approximation interval I₁.

Embodiments of the invention may further include a device for executing computer instructions, comprising: a configurable lookup table (LUT); a configurable polynomial approximation circuit; and at least one processing circuitry, configured to in each of a plurality of optimization iterations: calculate complexity values representing variation in computational behavior of a code sequence implementing a plurality of computer instructions at regions along an approximation interval I₁ of input values of the code sequence; determine an optimal configuration that includes a number of entries of the LUT, lengths of a plurality of unique segments within the approximation interval I₁, and polynomial values of a polynomial approximation function, wherein the optimal configuration is based on the complexity values and at least one computational resource constraint and wherein the lengths of respective segments are determined such that segments in regions having higher complexity values have shorter lengths than respective segments in regions having lower complexity values; reconfigure the configurable LUT and the configurable polynomial approximation circuit to implement the optimal configuration by modifying at least one of: a number of LUT entries associated with respective segments, and a polynomial processing element of the configurable polynomial approximation circuit; and in each of a plurality of computation iterations when executing the plurality of computer instructions: compute, using the configurable LUT and the configurable polynomial approximation circuit, an output value Y₁ of the code sequence applied to an input value X₁, wherein X₁ is within the approximation interval I₁.

Embodiments of the invention further include a method of computing an output value Y₁ of a mathematical function by at least one processor, the method comprising: calculating complexity values representing variation of the mathematical function at regions along an approximation interval I1; determining an optimal configuration that includes both a number of entries of a configurable look-up table (LUT) and lengths of a plurality of segments within the approximation interval I1 based on the complexity values and at least one computational resource constraint defining limitations of at least one of logic area and memory area, wherein the lengths of respective segments are determined such that segments in regions having higher complexity values have shorter lengths than respective segments in regions having lower complexity values; reconfiguring the configurable LUT and a configurable polynomial computation circuit to implement the optimal configuration by dynamically adjusting a number of LUT entries associated with respective segments and modifying polynomial processing elements based on the complexity values and computational resource constraints, wherein the number of LUT entries comprise categories for respective segments, corresponding preliminary approximation values, and corresponding mapping operator values; obtaining a query for computing the output value Y1 for a given input value X1, wherein X1 is within an approximation interval I1; selecting a segment of the plurality of segments based on the given input value X1; retrieving from the configurable LUT a preliminary approximation of the output value Y1, based on said selection; calculating an offset value of the given input value X1 within the selected segment; applying at least one polynomial using the configurable polynomial computation circuit on the offset value, to obtain a correction value; and computing the output value Y1 based on the preliminary approximation and the correction value.

Additionally, or alternatively, a length of at least one first segment of the respective plurality of unique segments, and a length of at least one second segment of the respective plurality of unique segments may be different.

Additionally, or alternatively, determining the optimal configuration may further comprise: receiving at least one accuracy requirement, defining a maximal value of an error metric for approximating the mathematical function; receiving at least one resource requirement, defining a constraint of computational resource in approximating the mathematical function; determining the number of entries of the LUT based on the at least one accuracy requirement and the at least one resource requirement; and calculating, for each entry of the LUT, a value of output Y1 at the corresponding segment.

Additionally, and alternatively, the complexity values may represent at least some of curvature, rapid changes, and inflection points of the mathematical function, and the determined segment lengths may achieve equal distribution of approximation error across all segments.

Additionally, or alternatively, the method may further comprise: receiving an accuracy requirement, defining a maximal value of an error metric for approximating the mathematical function within the reference segment; based on the accuracy requirement, determining a minimal degree of the polynomial; and applying an iterative process to calculate the polynomial, where each iteration includes: (i) calculating the polynomial's error in approximating the mathematical function within the reference segment, and (ii) increasing the polynomial degree until the polynomial's approximation error satisfies the accuracy requirement.

Additionally, or alternatively, the method may further comprise: receiving at least one resource requirement, defining a constraint of computational resource in approximating the mathematical function within the reference segment; and increasing the polynomial degree as long as the computational resource is satisfied.

Additionally, or alternatively, obtaining the query for computing the output value Y1 may comprise: receiving an initial query for calculating a target value Y0 of the mathematical function at an arbitrary input value X0, within an arbitrary interval I0; and applying a range reduction algorithm on the arbitrary input value X0, to calculate the given input value X1, wherein the given input value X1 represents the arbitrary input value X0 within the approximation interval I1.

Additionally, or alternatively, the method may further comprise: applying a projection algorithm on the output value Y1, to calculate the target value Y0 of the mathematical function at the arbitrary input value X0; and providing the target value Y0 as a response to the initial query.

Additionally, or alternatively, the at least one polynomial may comprise a first polynomial, pertaining to a first reference segment and a second polynomial, pertaining to a second reference segment, and the method may further comprise: calculating a first similarity value, representing similarity in behaviour between the selected segment and the first reference segment; calculating a second similarity value, representing similarity in behaviour between the selected segment and the second reference segment; choosing a reference segment based on the first similarity value and the second similarity value; and calculating the correction value based on the polynomial pertaining to the chosen reference segment.

Embodiments of the invention may further comprise an IC device for computing an output value of a mathematical function, comprising: a configurable look-up table (LUT) circuit having a plurality of entries, each corresponding to a plurality of segments of unequal lengths within an approximation interval over which the mathematical function is approximated; a configurable polynomial computation circuit; and at least one processor configured to: calculate complexity values representing variation of the mathematical function at regions along the approximation interval, determine an optimal configuration that includes both the number of entries of the configurable LUT circuit and lengths of the plurality of segments within the approximation interval based on the complexity values and at least one computational resource constraint defining limitations of at least one of a logic area of the IC device and a memory area of the IC device, wherein the lengths of respective segments are determined such that segments in regions having higher complexity values have shorter lengths than respective segments in regions having lower complexity values, and reconfigure the configurable LUT circuit and the configurable polynomial circuit to implement the optimal configuration by dynamically adjusting a number of LUT entries associated with respective segments and modifying polynomial processing elements based on the complexity values and computational resource constraints, wherein the number of LUT entries comprise categories for respective segments, corresponding preliminary approximation values, and corresponding mapping operator values.

Additionally, or alternatively, the at least one processor may be configured to: obtain a query for computing the output value Y1; select a segment of the plurality of segments, based on an input value X1; retrieve, from the LUT circuit, a preliminary approximation of the output value Y1, based on the selected segment; calculate an offset of the input value X1 within the selected segment; employ the polynomial computation circuit, to calculate a polynomial estimation of the mathematical function on the offset value, thereby obtaining a correction value; and compute the output value Y1 based on the preliminary approximation and the correction value.

Additionally, or alternatively, the number of entries may be determined based on (i) a required accuracy of the output value Y1, and (ii) the computational resource constraint on the device.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is a block diagram, depicting a computing device which may be included in a system for computing an output value of a mathematical function, according to some embodiments of the invention;
Fig. 2 is a block diagram, depicting a system (e.g., an integrated circuit (IC)) for computing an output value of a mathematical function, according to some embodiments of the invention;
Fig. 3 is a schematic diagram, depicting a process of computing an output value of a mathematical function, according to some embodiments of the invention;
Fig. 4 is a flow diagram depicting stages in a method of computing an output value of a mathematical function, according to some embodiments of the invention;
Fig. 5 is a block diagram depicting a system for designing an IC, adapted to output value of a mathematical function, according to some embodiments of the invention;
Fig. 6 is a flow diagram depicting stages in a method of designing an IC, for calculating an output value of a mathematical function, according to some embodiments of the invention; and
Fig. 7 is a flow diagram depicting stages in a method for executing computer instructions, including repeatedly determining an optimal configuration for computing an outcome of computing a code sequence, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term "set" when used herein may include one or more items.

Unless explicitly stated, the method embodiments described herein are not constrained to a particular order or sequence. Additionally, some of the described method embodiments or elements thereof can occur or be performed simultaneously, at the same point in time, or concurrently.

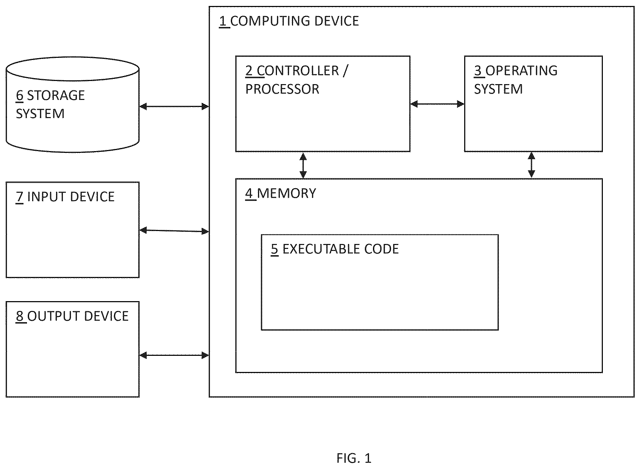

Reference is now made to Fig. 1, which is a block diagram depicting a computing device 1, which may be included within an embodiment of a system for computing an output value of a mathematical function, according to some embodiments. Additionally, or alternatively, computing device 1, may be included within an embodiment of a system for designing an integrated circuit (IC) for calculating an output value of a mathematical function, as elaborated herein.

Computing device 1 may include a processor or controller 2 that may be, for example, a central processing unit (CPU) processor, a chip or any suitable computing or computational device, an operating system 3, a memory 4, executable code 5, a storage system 6, input devices 7 and output devices 8. Processor 2 (or one or more controllers or processors, possibly across multiple units or devices) may be configured to carry out methods described herein, and/or to execute or act as the various modules, units, etc. One or more computing devices 1 may be included in, and may act as, the components of a system according to embodiments of the invention.

Operating system 3 may be or may include any code segment (e.g., one similar to executable code 5 described herein) designed and/or configured to perform tasks involving coordination, scheduling, arbitration, supervising, controlling or otherwise managing operation of computing device 1, for example, scheduling execution of software programs or tasks or enabling software programs or other modules or units to communicate. Operating system 3 may be a commercial operating system. It will be noted that an operating system 3 may be an optional component, e.g., in some embodiments, a system may include a computing device that does not require or include an operating system 3.

Memory 4 may be or may include, for example, a Random-Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 4 may be or may include a plurality of possibly different memory units. Memory 4 may be a computer or processor non-transitory readable medium, or a computer non-transitory storage medium, e.g., a RAM. In one embodiment, a non-transitory storage medium such as memory 4, a hard disk drive, another storage device, etc. may store instructions or code which when executed by a processor may cause the processor to carry out methods as described herein.

Executable code 5 may be any executable code, e.g., an application, a program, a process, task, or script. Executable code 5 may be executed by processor or controller 2 possibly under control of operating system 3.

For example, executable code 5 may be an application that may compute an output value of a mathematical function, according to some embodiments. In another example, executable code 5 may comprise a code sequence implementing a plurality of computer instructions implementing another computation.

In yet another example, executable code 5 may be included within an embodiment of a system for designing an IC, for calculating an output value of a mathematical function, as further described herein.

Although, for the sake of clarity, a single item of executable code 5 is shown in Fig. 1, a system according to some embodiments of the invention may include a plurality of executable code segments similar to executable code 5 that may be loaded into memory 4 and cause processor 2 to carry out methods described herein.

Storage system 6 may be or may include, for example, a flash memory as known in the art, a memory that is internal to, or embedded in, a micro controller or chip as known in the art, a hard disk drive, a CD-Recordable (CD-R) drive, a Blu-ray disk (BD), a universal serial bus (USB) device or other suitable removable and/or fixed storage unit.

Data pertaining to calculation of a mathematical function may be stored in storage system 6 and may be loaded from storage system 6 into memory 4 where it may be processed by processor or controller 2.

In some embodiments, some of the components shown in Fig. 1 may be omitted. For example, memory 4 may be a non-volatile memory having the storage capacity of storage system 6. Accordingly, although shown as a separate component, storage system 6 may be embedded or included in memory 4.

Input devices 7 may be or may include any suitable input devices, components, or systems, e.g., a detachable keyboard or keypad, a mouse and the like. Output devices 8 may include one or more (possibly detachable) displays or monitors, speakers and/or any other suitable output devices. Any applicable input/output (I/O) devices may be connected to Computing device 1 as shown by blocks 7 and 8. For example, a wired or wireless network interface card (NIC), a universal serial bus (USB) device or external hard drive may be included in input devices 7 and/or output devices 8. It will be recognized that any suitable number of input devices 7 and output device 8 may be operatively connected to Computing device 1 as shown by blocks 7 and 8.

A system according to some embodiments of the invention may include components such as, but not limited to, a plurality of central processing units (CPU) or any other suitable multi-purpose or specific processors or controllers (e.g., similar to element 2), a plurality of input units, a plurality of output units, a plurality of memory units, and a plurality of storage units.

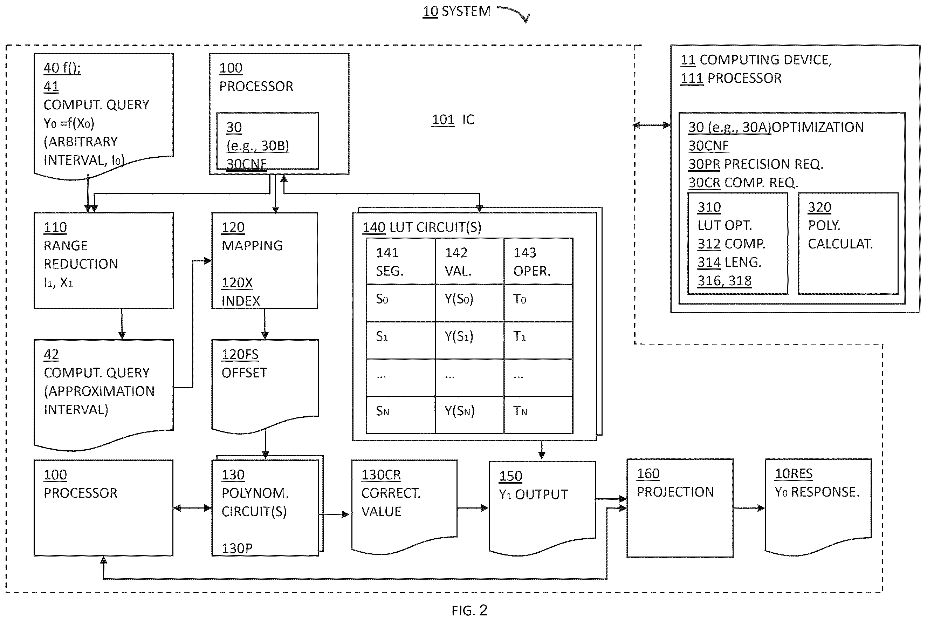

Reference is now made also to Fig. 2, which depicts a system 10 for calculating an output value 10RES of a mathematical function 40 (e.g., Y=f(X)), according to some embodiments of the invention.

According to some embodiments, system 10 may be implemented as a software module, a hardware module, or any combination thereof.

For example, system 10 may be implemented as an IC 101, or as one or more modules within an IC. In this context, the terms "system 10" and "IC 101" may be used interchangeably. IC 101 may be, or include, a reconfigurable processing grid, comprising a plurality of reconfigurable logical elements connected by a plurality of configurable data routing junctions.

Additionally, or alternatively, system 10 (e.g., IC 101) may include, or may be associated with (e.g., communicatively connected to) at least one computing device 11 such as computing device 1 of Fig. 1.

In such embodiments, computing device 11 may be configured to calculate an optimal configuration of one or more components (e.g., LUT circuit(s) 140, polynomial approximation circuit(s) 130) of IC 101, as elaborated herein. IC 101 may communicate with at least one processor 111 (such as processor 2 of Fig. 1) of computing device 11, to receive the calculated optimal configuration, and adapt the structure and/or functionality of respective components (e.g., LUT circuit(s) 140, polynomial approximation circuit (s) 130) accordingly.

According to some embodiments, IC 101 may include at least one embedded, on-chip processor 100 such as processor 2 of Fig. 1. It may be noted that "processor 100" entities in Fig. 2 may represent the same (e.g., a single) processing unit, or two or more different processing units, according to the specific implementation. Each of at least one processor 100 may be any kind of programmable or non-programmable circuitry that is configured to carry out the operations described herein. In some embodiments, at least part of computing device 11 may be implemented in IC 101. In such embodiments, at least one processor 100 may comprise at least one processor 111.As elaborated herein, the at least one processor 100 may be adapted to execute one or more modules of executable code (e.g., element 5 of Fig. 1) so as to employ one or more modules of IC 101, for calculating an output value 10RES of a mathematical function 40.

Additionally, or alternatively, the at least one processor 100 may be adapted to configure the structure and/or functionality of one or more components of IC 101.

For example, IC 101 may be, or may include one or more configurable logic elements. IC 101 may, for example, include a Field-Programmable Gate Array (FPGA), allowing fine-grained reconfigurability, and/or a Coarse-Grained Reconfigurable Architecture (CGRA), allowing run-time reconfiguration of functional elements within IC 101.

In such embodiments, the at least one processor 100 may be adapted to calculate an optimal configuration of one or more components (e.g., LUT circuit(s) 140, polynomial approximation circuit (s) 130) of IC 101, as elaborated herein, and may trigger reconfiguration of the respective components, in accordance with the calculated, optimal configuration. The term "optimal" may be used in this context to indicate a configuration that may exhibit superior performance, in relation to a predetermined metric, as known in the art. Such a metric may include, for example a minimal consumed power, a minimal consumed area, a maximal throughput, a minimal latency, and the like.

Arrows of Fig. 2 may represent flow of one or more data elements to and from system 10 and/or among modules or elements of system 10. Some arrows have been omitted on Fig. 2 for the purpose of clarity.

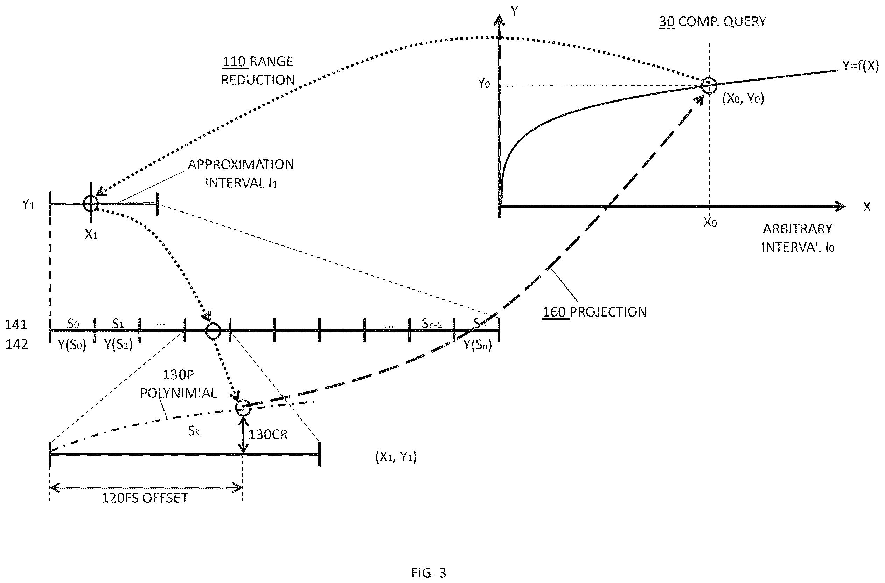

Reference is also made to Fig. 3, which is a schematic diagram, depicting a process of computing an output value of a mathematical function 40, according to some embodiments of the invention.

As shown in Fig. 2 and Fig. 3, system 10 may receive an initial query for calculating a target value Y₀ of a mathematical function 40 'f', at an arbitrary input value X₀, within an arbitrary, finite or infinite interval I₀, as in Eq. 1 below: ${Y}_{0} = f \left({X}_{0}\right)$

As explained herein, system 10 may be configured to transform the input value X₀, that lies within the arbitrary interval I₀ into a corresponding value X₁, within a predefined, approximation interval I₁, in a process that is commonly referred to in the art as "range reduction".

Approximation interval I₁ may be a finite interval (e.g., [0,1] or [1,2)), typically smaller than the initial, arbitrary interval I₀. The specific process of transformation by range reduction and projection may depend on the nature of the function being approximated, and is known in the art.

As a non-limiting example, consider a computational query 41 for calculating a value of a logarithmic function. In this example, the mathematical function 40 may be the logarithmic function, and computational query 41 may require computation of Y₀, given an input value X₀ (e.g., Y₀=log(X₀)).

Input value X₀ may be decomposed as in Eq. 2 below: ${X}_{0} = \left({X}_{1}\times {2}^{n}\right) ,$ where X₁ ∈ I₁ (e.g., I₁ = [1,2)), and n is an integer (e.g., the exponent in a floating-point representation of X₀).

The logarithmic function may thereby be written as in Eq. 2 below: $log \left({X}_{0}\right) = log \left({X}_{1}\times {2}^{n}\right) = log \left({X}_{1}\right) + \left(n\times log\left(2\right)\right) .$

During range reduction, the arbitrary range I₀ may be scaled, or reduced to the smaller range I₁ (e.g., [1,2)), also referred to herein as the "approximation range". In other words, input value X₀ of arbitrary range I₀ may be mapped to X₁ within approximation range I₁.

System 10 may then compute the logarithmic term of Eq. 4 ${Y}_{1} = log \left({X}_{1}\right) ,$ using approximation techniques, as elaborated herein.

In a subsequent projection stage, system 10 may provide the response 10RES (e.g., Y₀) for computational query 41 of the mathematical function 40 (e.g., the logarithmic function) over the initial, arbitrary range I₀ as in Eq. 5 below: ${Y}_{0} = {Y}_{1} + \left(n\times log\left(2\right)\right) .$

It may be appreciated that other processes of range reduction (and subsequent projection) may also be possible, for other mathematical functions (e.g., exponential functions, trigonometric functions, etc.), input ranges I₀, and approximation ranges I₁, as known in the art.

As shown in Fig. 2, system 10 may receive an initial computational query 41 for computing the output value Y₀ for a given input value X₀, within arbitrary range I₀. As explained herein, system 10 may apply a range reduction algorithm 110 on input value X₀, to calculate an input value X₁ within approximation range I₁.

In other words, system 10 (e.g., processor 100 of IC 101) may obtain an alternative query 42 for computing the output value Y₁ for a given input value X₁ (as in Eq. 4 above, for the example of a logarithmic function), where X₁ is within approximation interval I₁.

Input value X₁ may be regarded as representing the arbitrary input value X₀ within approximation interval I₁. System 10 (IC 101) may be adapted to compute an output value Y₁ of a mathematical function 40 (e.g., Eq. 4 above, for the example of a logarithmic function), for a given input value X₁ defined over approximation interval I₁.

As shown in Fig. 2, system 10 may include at least one look-up table (LUT) module 140. For example, system 10 may be implemented as, or may include an electrical circuit such as an IC 101, and the at least one LUT module may be implemented as a LUT circuit 140 within IC 101. In this context, the terms "LUT module 140" and "LUT circuit 140" may be used interchangeably.

Each LUT module 140 may be associated with a specific mathematical function 40. For example, IC 101 may include a plurality of LUT circuits 140, each adapted to handle computational queries 42 of respective mathematical functions (e.g., logarithm functions, trigonometric functions, exponential functions, and the like).

LUT circuit 140 may include a plurality of entries, each corresponding to a respective segment 141 of a plurality of unique segments 141 (denoted S₀, S₁, ...Sₙ) of approximation interval I₁.

Each entry of LUT circuit 140 may include at least one preliminary approximation value 142 of the output value Y₁, corresponding to the respective segment of approximation interval I₁.

Preliminary approximation values 142 are denoted Y(S₀), Y(S₁), ... Y(Sₙ) in Figs. 2 and 3, and are also referred to as "LUT approximation values 142".

LUT approximation values 142 may be precalculated values of the specific mathematical function 40 (e.g., logarithmic function, exponential function) at specific points (e.g., start points, mid-points, end points) of the respective segments 141 (S₀, S₁, ... Sₙ) in approximation interval I₁.

Pertaining to the example of the logarithmic mathematical function 40 brought above, preliminary approximation values 142 may be precalculated values of log(X₁) at endpoints of each segment 141 (S₀, S₁, ...Sₙ).

Additionally, or alternatively, LUT circuit 140 may include, for each segment entry 141 (S₀, S₁, ...Sₙ) a corresponding mapping operator value 143, adapted to allow projection of the approximated value Y₁ back to arbitrary interval I₀ (e.g., to obtain Y₀).

Pertaining to the example of the logarithmic mathematical function 40 brought above, mapping operator value 143 may be the term n×log(2) in Eq. 3.

According to some embodiments, system 10 (e.g., processor 100 of IC 101) may employ a mapping module 120, configured to select a segment 141 (e.g., Sₖ) of the plurality of segments 141 (S₀, S₁, ...Sₙ) based on the input value X₁.

In other words, mapping module 120 may calculate an index 120X (denoted k) of a segment 141 (e.g., Sₖ) which corresponds to a location of input value X₁ within approximation interval I₁.

For example, interval I₁ may be defined as [1, 2), and the number of segments may be 256. Processor 100 may calculate an index of a specific segment of the plurality of segments, based on the input value X₁. Processor 100 may select a specific segment 141 based on the calculated index 120X. In this example, a small value of X₁ (e.g., 1.1) would result in a small value of index 120X (e.g., k=25), thereby selecting segment 141 Sₖ₌₂₅ . In a complementary manner, a large value of X₁ (e.g., 1.9) would result in a larger value of index 120X (e.g., k=230), thereby selecting segment 141 Sₖ₌₂₃₀.

According to some embodiments, system 10 (e.g., processor 100 of IC 101) may retrieve, from LUT circuit 140, a preliminary approximation value 142 of output value Y₁ (e.g., Y(Sₖ)) based on the calculated index 120X (k) (e.g., based on selected segment Sₖ).

Pertaining to the example above, when X₁=1.1, the retrieved preliminary approximation value 142 may be Y(Sₖ₌₂₅), and when X₁=1.9, the retrieved preliminary approximation value 142 may be Y(Sₖ₌₂₃₀).

As shown in Figs. 2 and 3, system 10 (e.g., processor 100 of IC 101) may further employ mapping module 120, to calculate an offset value 120FS, representing offset of input value X₁ within the selected segment Sₖ. As explained herein, system 10 (e.g., IC 101) may apply a polynomial approximation on offset value 120FS, to improve approximation of output value Y₁.

As shown in Fig. 2, system 10 may include at least one polynomial module 130. For example, system 10 may be implemented as an electrical circuit such as an IC 101, and polynomial module 130 may be implemented as a configurable polynomial approximation electrical circuit 130 (or "polynomial circuit 130" for short) within IC 101.

Each polynomial circuit 130 may be associated with a specific mathematical function 40. For example, IC 101 may include a plurality of polynomial circuits 130, each adapted to handle polynomial approximations 130P of respective mathematical functions (e.g., logarithm functions, trigonometric functions, and the like).

Additionally, or alternatively, each polynomial circuit 130 of the one or more polynomial circuits may be associated with (e.g., represent polynomial approximation at) a specific reference segment 141 Sᵣ of the plurality of segments.

Polynomial approximation 130P may be, or may include a data structure (e.g., a numerical vector) that represents coefficients (C₀, C₁, ... Cₙ) of a polynomial, such as a Taylor polynomial or Chebyshev polynomial, which approximates a respective mathematical function 40 of interest (e.g., the mathematical function 40 of query 41) as in Eq. 6 below: $Y = {C}_{0} + {C}_{1} ⋅ X + … {C}_{n} ⋅ {X}^{n}$

According to some embodiments, polynomial circuit 130 may be configured to calculate a polynomial approximation 130P of the mathematical function 40 over one or more (e.g., a single) segment 141 (hereby referred to as a "reference segment", e.g., Sᵣ) of the plurality of segments 141 (S₀, S₁, ...Sₙ).

Additionally, or alternatively, polynomial approximation(s) 130P of one or more mathematical functions, may be calculated over one or more reference segments Sᵣ in an offline process, e.g., by at least one polynomial computing module 320 of an associated computing device 11, as elaborated herein.

According to some embodiments, system 10 (e.g., processor 100 of IC 101) may employ polynomial circuit 130, to apply the at least one polynomial 130P on offset value 120FS, to obtain a correction value 130CR. In other words, polynomial circuit 130 may introduce offset value 120FS as the input variable X of Eq. 6, to obtain correction value 130CR as output value Y. As shown in Fig. 3, correction value 130CR may represent a change, or refinement of approximated output value Y₁, due to offset 120FS.

It may be appreciated that reference segment 141 (e.g., (Sᵣ), the segment over which polynomial approximation 130P was calculated) may (or may not) be different from the selected segment 141 (e.g., (Sₖ), the segment to where X₁ was mapped). In other words, system 10 may refine the approximation of output value Y₁, based on a polynomial that was calculated for another segment.

According to some embodiments, processor 100 may obtain, or calculate, for one or more (e.g., each) pair of segments 141, a similarity value 316, representing similarity in behaviour between each segment 141 of the pair. Similarity value 316 may represent, for example, similarity in a tendency (e.g., incline, decline) of function 40 between two compared segments 141, fluctuation or variability of function 40 between two compared segments 141, existence of singular points within the compared segment 141, and the like.

According to some embodiments, system 10 may allow calculation of correction value 130CR when a behaviour of the mathematical function is sufficiently similar between the reference segment Sᵣ 141 and the selected segment Sₖ 141, according to the predetermined similarity value 316.

Additionally, or alternatively, system 10 may choose a different segment Sᵣ 141, e.g., require calculation of correction value 130CR based on a polynomial approximation 130P of another (e.g., a second) reference segment Sᵣ 141, when behaviour of the mathematical function 40 is not sufficiently similar between the first reference segment Sᵣ 141 and the selected segment Sₖ 141.

In other words, the at least one polynomial 130P may include a first polynomial 130P, pertaining to a first reference segment 141 Sᵣ and a second polynomial 130P, pertaining to a second reference segment 141 Sᵣ. System 10 may calculate a first similarity value 316, representing similarity in behaviour between the selected segment 141 Sₖ and the first reference segment, and calculate a second similarity value 316, representing similarity in behaviour between the selected segment 141 Sₖ and the second reference segment. System 10 may subsequently choose a specific reference segment (e.g., first or second reference segment 141 Sᵣ) based on the first similarity value 316 and second similarity value 316, and calculate the correction value 130CR based on the polynomial 130P pertaining to the chosen reference segment.

According to some embodiments, system 10 (e.g., processor 100 of IC 101) may subsequently compute output value 150 (Y₁) based on (a) the preliminary, LUT-based, approximation 142, and (b) the correction value 130CR, as in Eq. 7 below: ${Y}_{1} = {Y}_{LUT _ APPROXIMATION} + {Y}_{POLYNOMIAL _ CORRECTION}$ where Y_{LUT_APPROXIMATION} is LUT approximation 142, and Y_{POLYNOMIAL_CORRECTION} is correction value 130CR.

In another example, output value 150 (Y₁) may be calculated as a weighted sum of LUT approximation 142 and correction value 130CR. Other options are also possible.

According to some embodiments, system 10 (processor 100 of IC 101) may then apply a projection algorithm on the output value Y₁, as depicted in Fig. 3, to calculate target value Y₀ of the mathematical function 40 at the arbitrary input value X₀. Processor 100 may then provide the target value Y₀ as a response 10RES to the initial computational query 41.

In the non-limiting example of a logarithmic mathematical function 40, system 10 may calculate target value Y₀ according to Eq. 5, above (Y₀=Y₁+(n×log(2))): In this example, processor 100 may retrieve mapping operator value 143 (e.g., n×log(2)) from LUT circuit 140, and compute response Y₀ 10RES for computational query 41 of the mathematical function 40, over the initial, arbitrary range I₀, based on output value 150 (Y₁) and operator value 143.

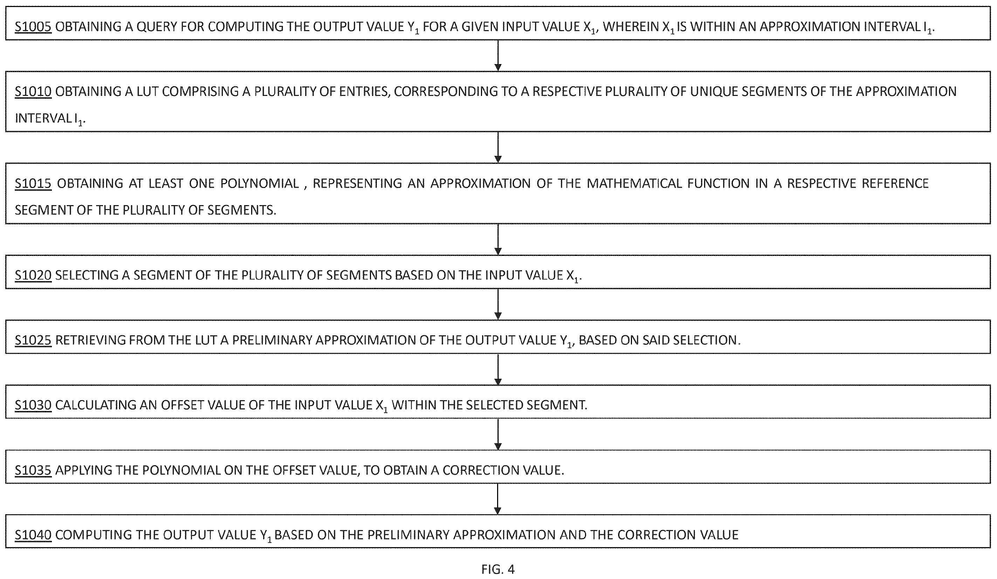

Reference is now made also to Fig. 4, which is a flow diagram depicting stages in a method of computing an output value of a mathematical function 40 by at least one processor (e.g., processor 100 of Fig. 2), according to some embodiments of the invention.

As shown in step S1005, the at least one processor 100 may obtain a query (e.g., computational query 42 of Fig. 2), for computing the output value Y₁ of the mathematical function 40 (e.g., element 150 of Fig. 2) for a given input value X₁, wherein X₁ is within an approximation interval I₁.

As shown in step S1010, embodiments of the invention may include obtaining at least one LUT (e.g., LUT circuit 140 of Fig. 2), associated with the mathematical function 40 of computational query 42. LUT 140 may include a plurality of entries, each corresponding to a respective segment (e.g., element 141 of Figs. 2, 3) of a plurality of unique segments 141 within approximation interval I₁.

As shown in step S1015, embodiments of the invention may include obtaining at least one polynomial, representing an approximation of the mathematical function 40 in a respective reference segment 141 (e.g., Sᵣ of Fig. 3) of the plurality of segments 141.

As shown in step S1020, the at least one processor 100 may select a segment 141 (e.g., Sₖ of Fig. 3) of the plurality of segments 141, based on the input value X₁. The at least one processor may then (step S1025) retrieve, from LUT 140 a preliminary approximation of the output value Y₁,(e.g., element 142 of Fig. 2), based on said segment selection.

As shown in step S1030, the at least one processor 100 may calculate an offset value (e.g., Offset 120FS of Figs. 2, 3) of the input value X₁ within the selected segment 141 Sₖ.

The at least one processor may then apply (step S1035) the at least one polynomial circuit 130 on offset value 120FS, to obtain a correction value (e.g., 130CR of Figs. 2, 3).

For example, and as elaborated herein, polynomial circuit 130 may be adapted to apply polynomial approximation 130P on offset value 120FS according to Eq. 6, to produce correction value 130CR.

The at least one processor may subsequently compute (step S1040) the output value 150 (Y₁) based on (i) preliminary approximation value 142 and (ii) correction value 130CR.

As discussed herein, a tradeoff exists between (i) the number and size of segments (e.g., depth of LUT circuit 140), (ii) a degree of polynomial approximation 130P, (iii) accuracy of approximation of output 150 (Y₁), and (iv) computational resource consumption of system 10, such as logic and memory area, of IC 101, and computing cycles of processor 100.

For example: a large number of segments 141 will reduce quantization errors in the LUT approximation, but will also require a deeper LUT 140, resulting in larger area consumption by LUT circuit 140.

Additionally, segmenting approximation interval I₁ to more segments 141, will result in smaller segments 141 (e.g., smaller reference segment(s) Sᵣ). This will allow system 10 to maintain accuracy of the polynomial approximation 130P, while using lower-degree polynomials, thereby easing consumption of computing resources.

It may therefore be appreciated that elements of system 10, such as LUT circuit(s) 140 and polynomial calculation circuit(s) 130 may be optimized, to fabricate IC 101 in accordance with predetermined requirements of accuracy and resource consumption.

According to some embodiments, IC 101 may be associated with, or communicatively connected to computing device 11. As explained herein (e.g., in relation to Fig. 2), Computing device 11 may employ a first optimization module 30 (denoted 30A) to calculate an optimal configuration 30CNF of one or more components (e.g., LUT circuit(s) 140, polynomial circuit(s) 130) of IC 101. The calculated optimal configuration 30CNF may be communicated to one or more on-chip processors 100, and applied, by the one or more on-chip processors 100 on the respective components.

Additionally, or alternatively, IC 101 may include one or more reconfigurable elements. The one or more on-chip processors 100 may themselves employ one or more respective optimization modules 30 (denoted 30B) to calculate optimal configuration 30CNF of one or more components (e.g., LUT circuit(s) 140, polynomial circuit(s) 130), as elaborated herein. The one or more on-chip processors 100 may subsequently reconfigure process of IC 101, to apply the calculated, optimal configuration 30CNF of the respective components.

According to some embodiments, optimization module 30 may receive (e.g., via input 7 of Fig. 1) at least one accuracy requirement 30PR, defining a maximal value of an error metric for approximating the mathematical function 40. For example, the value of an error metric 30PR may include, for example a maximal approximation error of a polynomial approximation 130P, a maximal quantization error of LUT 140, and the like

Additionally, or alternatively, optimization module 30 may receive at least one computational resource requirement 30CR, defining a constraint of computational resource in approximating the mathematical function 40. The computational resource requirement 30CR may include, for example, a limitation of logic and/or memory area on IC 101, a limitation of power consumption of IC 101, a limitation of a number of computing cycles required by processor 100 in IC 101, and the like. For example, when IC 101 comprises a reconfigurable processing grid, a constraint pertaining to logic on IC 101 may pertain to a number of reconfigurable logical elements of the plurality of reconfigurable logical elements of the reconfigurable processing grid, and additionally, or alternatively, to a number of reconfigurable data routing junctions of the plurality of reconfigurable data routing junctions of the reconfigurable processing grid. Additionally, or alternatively, a constraint may pertain to a number of clock cycles required by at least part of the reconfigurable processing grid. A limitation of a logic area may define an amount of area on IC 101 of an LUT, and additionally, or alternatively, an amount of area on IC 101 of a configurable polynomial approximation circuit. A limitation of a memory area may define an amount of memory on IC 101 used by an LUT, and additionally, or alternatively, an amount of memory on IC 101 used by a configurable polynomial approximation circuit. When IC 101 comprises a reconfigurable processing grid, a limitation of a memory area may define an amount of memory in the reconfigurable processing grid.

According to some embodiments, optimization module 30 (LUT optimization module 310) may calculate an optimal configuration of LUT circuit 140 by determining a number of entries of the LUT 140 (each associated with a respective segment 141 of I₁) based on (a) the at least one accuracy requirement, and (b) the at least one resource requirement, as elaborated herein. Processor 100/111 may proceed to calculate, for each entry of LUT 140, a value of output Y₁ at the corresponding segment.

For example, a small number of entries will result in a small number of relatively large segments 141. This may satisfy a computational resource requirement 30CR for a maximal area of LUT 140. However, on the other hand, a small number of entries may also incur a large quantization error of LUT approximation value 142, and produce polynomial approximation 130P having poor accuracy. LUT optimization module 310 may therefore be adapted to define optimal configuration 30CNF as an optimal number of entries of LUT 140, to optimally satisfy these contradicting requirements.

As explained herein, segments 141 of interval I1 may not be even in length. For example, a first region of interval I₁, where the mathematical function exhibits strong fluctuations or irregularities may be divided into smaller segments 141, whereas a second region of interval I₁, where the mathematical function 40 exhibits a more regular, or smooth behaviour may be divided to fewer, larger segments 141.

In other words, when function 40 has sections where it changes rapidly (e.g., high curvature or steep gradients), smaller subintervals may enable better local approximations with lower polynomial degrees, resulting in higher accuracy. Conversely, in regions where function 40 is relatively flat or smooth, larger subintervals can be used because the polynomial approximation can remain accurate over a larger range, thereby reducing the number of intervals and the size of the LUT 140.

Some regions of the function may require higher accuracy (for example, near zero for logarithmic or exponential functions). By using smaller subintervals in those regions, the LUT 140 approximation combined with minimax polynomials 130P can achieve the desired accuracy with minimal resource consumption.

In some cases, the optimal placement of subintervals could resemble a nonuniform distribution similar to Chebyshev nodes. This could reduce the overall approximation error by concentrating subintervals 141 where function 40 is most sensitive to changes, thus mimicking the behavior of Chebyshev minimax approximations.

Additionally, or alternatively, embodiments of the invention may adjust subinterval 141 lengths such that the approximation error is equally distributed across all subintervals. This strategy ensures that no subinterval disproportionately contributes to the overall approximation error.

According to some embodiments, optimization module 30 may calculate a complexity value 312, representing variation (e.g., sharp curvature, rapid changes, inflection points, and the like) of the mathematical function at one or more locations or regions along approximation interval I₁.

For example, when complexity value 312 in a region of segments 141 is low (e.g., representing a smooth function), the length 314 of these segments may be relatively large.

In a complementary manner, when complexity value 312 in a region of segments 141 is high (e.g., representing variations or in the function's behaviour), the length 314 of these segments may be relatively small.

Optimization module 30 may subsequently determine optimal configuration 30CNF as a length 314 of one or more segments of the plurality of segments of LUT 140, based on complexity value 312.

According to some embodiments, optimization module 30 may include a polynomial calculation module 320. Polynomial calculation module 320 may be adapted to receive accuracy requirement 30PR, defining a minimal value of an error metric for approximating the mathematical function 40 within at least one reference segment Sᵣ, and/or at least one computational resource requirement 30CR, defining a constraint of computational resource in approximating the mathematical function 40.

As elaborated herein, polynomial calculation module 320 may calculate an optimal polynomial approximation 130P, e.g., as one that has an optimal (e.g., a minimal) polynomial degree D, in accordance with requirements 30PR and/or 30CR. Polynomial calculation module 320 may provide the optimal polynomial approximation 130P as part of the calculated optimal configuration 30CNF.

For example, polynomial calculation module 320 may initially determine an initial, minimal degree D of polynomial approximation 130P based on the accuracy requirement. It may be appreciated that a large degree D may facilitate better fitting (e.g., reduce polynomial approximation error) of polynomial approximation 130P to the underlying mathematical function 40, but may also incur additional computational resources (e.g., memory and computation cycles). Polynomial calculation module 320 may therefore employ an iterative process to calculate the polynomial. Each iteration of the iterative process may include the following steps:

Polynomial calculation module 320 may calculate a current polynomial approximation 130P (e.g., coefficients C1, ..., Cn of an interim polynomial, as in Eq. 6), having a current degree, and adapted to approximate the mathematical function 40 over the reference segment, as known in the art. Polynomial calculation module 320 may calculate an error value, representing the current, interim polynomial's error in approximating the mathematical function 40 within the reference segment. Polynomial calculation module 320 may and (iii) increasing the polynomial degree, and repeat the iterative process, until the polynomial's approximation error value satisfies the accuracy requirement 30PR, and as long as computational resource requirements 30CR (e.g., memory and computation cycles) are satisfied, to obtain a final version of the polynomial 130P.

Additionally, or alternatively, polynomial calculation module 320 may calculate for one or more (e.g., each) pair of segments 141, a similarity value 316, as explained herein. Polynomial calculation module 320 may subsequently include, as part of the calculated optimal configuration 30CNF, an association between specific segments 141 (S₀, S₁, ...Sₙ) of LUT 140 and corresponding, representative reference segments 141 Sᵣ based on (e.g., having the highest) common similarity value 316.

According to some embodiments, optimization module 30 may communicate optimal configuration 30CNF to modules of system 10, to enforce or reconfigure modules of IC 101 so as to operate in accordance with optimal configuration 30CNF.

For example, IC 101 may be a configurable device such as a CGRA or FPGA, and may include one or more configurable components such as configurable LUT circuit(s) 140 and/or configurable polynomial circuit(s) 130. In such embodiments, at least one on-chip processor 100 may calculate optimal configuration 30CNF, and/or receive calculated optimal configuration 30CNF from an associated computing device. On-chip processor 100 may subsequently reconfigure one or more of the configurable components (e.g., polynomial circuit 130, LUT circuit 140), to change a structure, and/or operation of the configurable components, in accordance with the calculated optimal configuration 30CNF. For example, optimal configuration 30CNF may be applied such that the number of entries in LUT circuit 140 may be determined based on (i) required accuracy 30PR of the output value Y₁, and (ii) computational resource constraint (e.g., area, computing cycles) 30CR on the IC 101 device.

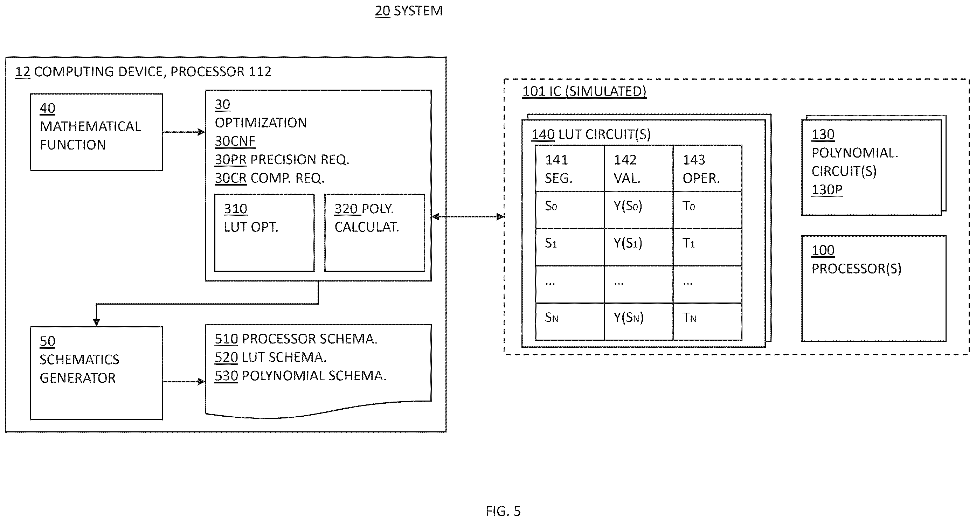

In another example, IC 101 may be an Application-Specific Integrated Circuit (ASIC). In such embodiments, computing device 11 may calculate optimal configuration 30CNF as explained herein, and produce a design schematic of one or more components (e.g., polynomial circuit 130, LUT circuit 140, on-chip processor 100) in accordance with the calculated optimal configuration 30CNF as elaborated herein (e.g., in relation to Fig. 5).

For example, optimal configuration 30CNF may include a required precision (single/double precision) representation of polynomial 130P, a degree of polynomial 130P, a number of coefficients of polynomial 130P, a rounding of coefficients of polynomial 130P, and the like. Schematic of polynomial circuit 130 may represent electrical components (e.g., registers, multipliers, adders, multiplexers, and the like) that may be required, as known in the art, to implement polynomial approximation function 130P as in Eq. 6 (C₀ + C₁·X +... Cₙ·Xⁿ) according to optimal configuration 30CNF.

The design schematic (e.g., of polynomial circuit 130, LUT circuit 140, on-chip processor 100) may be translatable into a physical layout design, allowing fabrication of IC 101, as known in the art.

Reference is now made also to Fig. 5, which is a block diagram depicting a system 20 for designing an IC, such as IC 101 of Fig. 2, for calculating an output value of a mathematical function 40, according to some embodiments of the invention.

According to some embodiments, system 20 may be the same as system 10 of Fig. 2, and may be implemented as a software module, a hardware module, or any combination thereof.

Additionally, or alternatively, system 20 may be, or may include a computing device 12 such as element 1 of Fig. 1, having a processor 112 such as processor 2 of Fig. 1. Computing device 12 may be the same as computing device 12 of Fig. 2.

Computing device 12 may be adapted to execute one or more modules of executable code (e.g., element 5 of Fig. 1) to design, or simulate an IC, as known in the art.

In the context of the present invention, computing device 12 may be configured to design, or simulate IC 101 for calculating an output value (e.g., 10RES of Fig. 2) of a mathematical function 40, as described herein.

Arrows of Fig. 5 may represent flow of one or more data elements to and from system 20 and/or among modules or elements of system 20. Some arrows have been omitted on Fig. 5 for the purpose of clarity.

As shown in Fig. 5, system 20 may include an optimization module 30, which may be the same as optimization module 30 of Fig. 2. System 20 may employ optimization module 30, to calculate an optimal configuration 30CNF of one or more components of IC 101, as elaborated herein.

According to some embodiments, computing device 12 may simulate functionality of IC 101, for calculating an output value 10RES of a mathematical function 40, under constraints of accuracy 30PR and computational requirements 30CR, to determine optimal configuration 30CNF, and optimize a structure of one or more components of IC 101, prior to manufacture. Computing device 12 may subsequently employ a schematic generator module or application as known in the art, to produce a schematic of one or more modules of IC 101.

As shown in Fig. 5, system 20 may obtain (e.g., from input 7 of Fig. 1) a definition of the mathematical function 40 over an approximation interval I₁.

Additionally, or alternatively, system 20 may receive (e.g., from input 7 of Fig. 1) one or more requirements or constraints 30CR pertaining to computational resources of IC 101, including, for example, logic and memory area on IC 101, power consumption of IC 101, a number of computing cycles required by an on-chip processor 100 of IC 101, and the like.

Additionally, or alternatively, optimization module 30 may receive (e.g., from input 7 of Fig. 1) one or more requirements 30PR for accuracy of approximated value 150 of Y₁ by IC 101. Accuracy requirement 30PR may define a maximal allowable value for an error metric for approximating the output value Y₁, including for example a maximal approximation error of a polynomial approximation 130P, a maximal quantization error of LUT 140, and the like.

As elaborated herein, optimization module 30 may calculate an optimal configuration 30CNF of LUT circuit 140 based on the at least one resource requirement 30CR and the at least one accuracy requirement 30PR. This optimal configuration 30CNF may include for example a number of segments 141, a length of one or more segments 141, and the like.

Schematics generator module may subsequently generate, based on this optimal configuration 30CNF, a LUT schematic 520. LUT schematic 520 may represent a LUT circuit 140 that includes a plurality of entries, in accordance with calculated optimal configuration 30CNF:

Each entry of the LUT circuit 140 may correspond to a respective, unique segment of the approximation interval I₁. Each entry of the LUT circuit 140 may be adapted to maintain a precalculated value of output Y₁ at the corresponding segment (e.g., at an endpoint of that segment). LUT circuit 140 may comply with optimal configuration 30CNF by having the optimal, calculated number of entries (corresponding to optimal number of segments). Each entry of the LUT circuit 140 may comply with optimal configuration 30CNF by having the optimal calculated length.

Additionally, or alternatively, optimal configuration 30CNF may include one or more optimal (e.g., having a minimal degree) polynomial approximations 130P, corresponding to one or more respective reference segments Sr, as elaborated herein.

Schematics generator module 50 may subsequently generate, based on this optimal configuration 30CNF a polynomial schematic, representing a polynomial circuit 130 that is adapted to calculate a polynomial estimation of the mathematical function 40 (e.g., correction value 130CR of Fig. 2 and Fig. 3) in a reference segment of the plurality of segments.

In other words, schematics generator module 50 may generate the polynomial schematic such that polynomial circuit 130 may calculate the polynomial estimation (e.g., correction value 130CR) of mathematical function 40, based on the final version of the iterative polynomial calculation process.

Polynomial circuit 130 may comply with optimal configuration 30CNF by calculating the polynomial estimation (e.g., correction value 130CR), in accordance with the at least one accuracy requirement 30PR, e.g., having a polynomial approximation error that does not exceed a predetermined threshold.

Each entry of the LUT circuit 140 may further comply with optimal configuration 30CNF by being associated with a proper, representative reference segment Sᵣ (and the corresponding polynomial approximation 130P), based on similarity metric 316.

According to some embodiments, schematics generator module 50 may generate at least one processor schematic, representing at least one respective on-chip processor 100, as known in the art.

Processor schematic 510, polynomial schematic 530, and LUT schematic 520 may be adapted to be translated into a physical layout design, respectively representing one or more on-chip processors 100, polynomial circuits 130 and LUT circuits 140. As known in the art, this physical layout design may be utilized for fabricating IC 101, e.g., as an ASIC device. The fabricated IC 101 may thereby be configured to approximate an output value (Y₁ 150 and/or Y₀ 10RES) of mathematical function 40.

The at least one respective on-chip processor 100 may be adapted to be in communication with the one or more LUT circuits 140 and one or more polynomial circuits 130, as depicted in Fig. 2.

Additionally, or alternatively, computing device 12 may produce one or more modules of instruction code (e.g., element 5 of Fig. 1), that may be executable by the at least one on-chip processor 100.

Upon execution of the modules of instruction code 5, the at least one processor 100 may be configured to employ the one or more LUT circuits 140 and the one or more polynomial circuits 130 so as to approximate the output value Y₁ of mathematical function 40, over interval I₁ (element 150 of Fig. 2), as explained herein.

Additionally, or alternatively, upon execution of the modules of instruction code 5, the at least one processor 100 may be configured to calculate an output value Y₀ of mathematical function 40, over arbitrary interval I₀ (element 10RES of Fig. 2), as explained herein.

In other words, upon execution of the modules of instruction code 5, the at least one processor 100 may be configured to: (i) retrieve a preliminary approximation 142 of output value Y₁ from an LUT circuit pertaining to the mathematical function 40; (ii) calculate an offset value (120FS of Fig. 2 and Fig. 3) of input value X₁ within the selected segment 141 of I₁; (iii) employ a polynomial circuit 130, pertaining to the mathematical function 40 on the offset value, to obtain a correction value (130CR of Fig. 2 and Fig. 3); and (iv) compute the value 150 Y₁ based on the preliminary approximation 142 and the correction value 130CR, as elaborated herein.

As explained herein, LUT optimization module 310 may be configured to determine an optimal configuration 30CNF, defining a structure of LUT circuit 140 for approximating Y1, while balancing requirements of accuracy 30PR and computing resource consumption 30CR.

The size of LUT 140 may be determined by the number of segments 141 into which the function's domain (e.g., approximation interval I₁) is divided, the size of each segment 141, and the degree D of the polynomial 130P used for approximation within each segment 141.

Increasing the number of segments 141 in LUT 140 may result in smaller segments 141, which can reduce the complexity of the polynomial required for each segment 141. This may enhance an overall accuracy of approximated value 150 (Y₁), because the polynomial 130P may handle smaller intervals more effectively.

Additionally, polynomial approximations 130P used within each segment 141 can be of lower degree, because the underlying mathematical function 40 may vary less over a smaller range.

On the other hand, a large number of segments 141 may incur a larger LUT circuit 140 size, which may, in turn, increase memory usage and area consumption, possibly failing to meet computational resource requirements 30CR.

It should also be noted that approximating a continuous function over an interval (e.g., I₁) by dividing it into smaller segments 141 and using a LUT 140 to map these segments 141 to specific points may introduce quantization errors.

LUT optimization module 310 may calculate the accuracy of LUT approximation value 142, by estimating the function's variation within each segment 141.

For example, a first-order approximation of a quantization error within a segment 141 can be expressed as in Eq. 8, below: ${E}_{LUT} \left(x\right) \approx Δx / 2 \left|f′\left(x\right)\right|$ where E_{LUT} represents the quantization error, Δx represents length 314 of the relevant segment 141, and f'(x) represents the derivative of mathematical function 40 in that segment 141.

As explained herein, the behaviour of mathematical function 40 in each segment 141 may be approximated using a polynomial approximation 130P. The error introduced by the polynomial approximation may depend upon the polynomial approximation's 130P degree, and upon how well it matches the mathematical function within that segment 141.

The total approximation error due to the polynomial approximation over all segments 141 can be bounded using known results from approximation theory. For a sufficiently smooth function (e.g., continuous with bounded derivatives), the error of a minimax polynomial of degree D can be estimated as in Eq. 9, below: ${E}_{POLY} ∈ O \left(\left(K/{D}^{2}\right)⋅{\left(Δx\right)}^{D + 1}\right)$ where K is a factor which reflects the smoothness and behavior of the function.

The total approximation error of polynomial 130P may therefore be calculated as a total error E_{TOT} of approximation of the mathematical function's 40 within segment 141, and may include a combination (e.g., a sum) of the LUT quantization error E_{LUT} , the evaluation error EEVAL that arises due to evaluation of the polynomial and rounding of the coefficients to the working precision, and the polynomial approximation error E_{POLY}, e.g., as in Eq. 10: ${E}_{TOT} = {E}_{POLY} + EEVAL + {E}_{LUT}$

LUT optimization module 310 may therefore adjust the number of LUT 140 segments 141, a size of LUT 140 segments 141, a degree of polynomial approximation 130P, to achieve a balance between high accuracy requirements 30PR in approximation of function 40, while maintaining efficient utilization of computational resources, according to computational resource requirements 30CR.

As explained herein, Polynomial calculation module 320 may be configured to enhance accuracy of function 40 approximation by adjusting the degree of polynomial 130P.

A polynomial of degree n consists of n+1 terms. By increasing the degree of the polynomial, polynomial calculation module 320 may introduce more coefficients (terms) that can be fine-tuned to minimize the error between polynomial 130P and the target function 40. This higher degree polynomial has greater flexibility to "track" oscillations of the target function 40, thereby reducing the amplitude of these oscillations and consequently lowering the maximal polynomial approximation error E_{POLY}.

Certain functions exhibit complex behaviors, such as curvature, rapid changes, or inflection points. A polynomial with a low degree may not have sufficient terms to accurately capture this complexity. Higher degree minimax polynomials or Chebyshev polynomials may distribute the error more evenly across the interval, resulting in a smaller overall maximum error.

However, while increasing the polynomial degree improves accuracy, it can also introduce numerical instability, especially near boundaries of interval 141. Therefore, polynomial calculation module 320 may carefully balance the degree of the polynomial 130P to avoid such instabilities.

To determine an optimal degree of the polynomial, polynomial calculation module 320 may incrementally increase the degree, until the approximation error E_{POLY} falls below a predetermined target accuracy (e.g., defined by 30PR). Polynomial calculation module 320 may simultaneously monitor the total error E_{TOT}, to ensure that it remains within a predetermined desired accuracy threshold (e.g., defined by 30PR).

Additionally, polynomial calculation module 320 may account for errors due to rounding of coefficients to the working precision.

Polynomial calculation module 320 may thus strike a balance between adding flexibility for better approximation and managing computational cost and stability to avoid excessive evaluation errors.

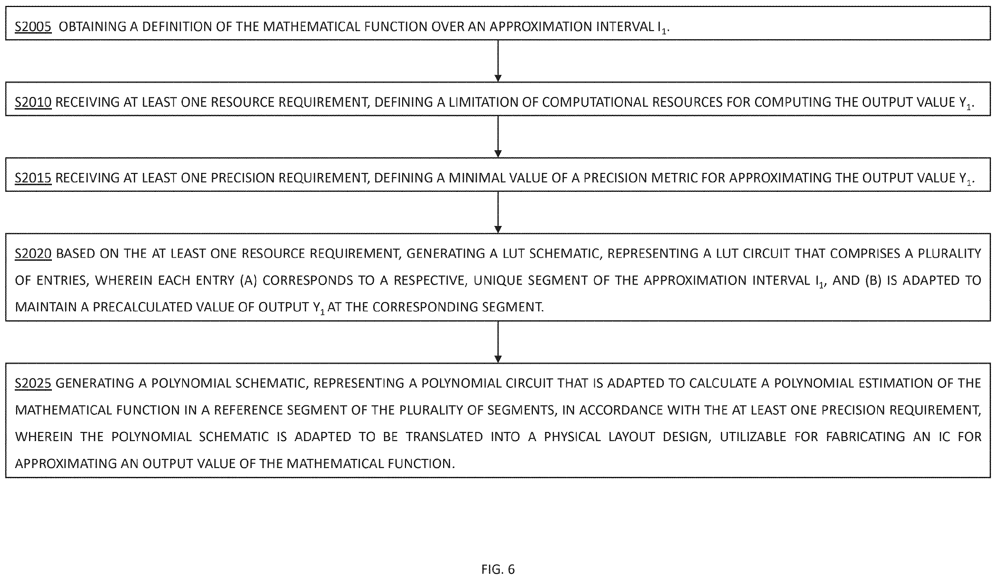

Reference is now made also to Fig. 6, which is a flow diagram depicting stages in a method of designing an IC (e.g., system or IC device of Fig. 2) for calculating an output value of a mathematical function 40, according to some embodiments of the invention.

As shown in step S2005, at least one processor such as processor 2 of fig. 1 (e.g., processor 111 of Fig. 2, processor 112 of Fig. 5) may obtain a definition of the mathematical function 40 (e.g., a logarithmic function, trigonometric function, exponential function, and the like) over an approximation interval I₁.

As shown in steps S2010 and S2015, the at least one processor 2 may receive at least one computational resource requirement (e.g., 30CR of Figs. 2, 5), and/or at least one accuracy requirement (e.g., 30PR of Figs. 2, 5).

Computational resource requirement 30CR may define one or more limitations of computational resources (e.g., computing cycles, memory, power, and the like) for computing output value Y₁. Accuracy requirement 30PR may define a maximal allowable value of an error metric (e.g., a maximal absolute error) for polynomial approximation of output value Y₁.

As shown in step S2020, based on the at least one resource requirement, the at least one processor 2 may generate a LUT schematic, representing at least one LUT circuit (e.g., 140 of Figs. 2, 5).

Each LUT circuit 140 may include a plurality of entries. Each entry may (a) correspond to a respective, unique segment 141 (e.g., S₀, ..., S_{N}) of the approximation interval I₁. Additionally, or alternatively, each entry may be adapted to maintain a precalculated value (e.g., 142 of Figs. 2, 5) of result Y₁ at the corresponding segment.

As shown in step S2025, the at least one processor 2 may generate a polynomial schematic (e.g., 530 of Fig. 5). Polynomial schematic 530 may represent a polynomial circuit (e.g., 130 of Figs. 2, 5) that is adapted to calculate a polynomial estimation 130 of mathematical function 40 in a reference segment 141 (e.g., Sₖ) of the plurality of segments 141, in accordance with the at least one accuracy requirement 30PR.

The polynomial schematic may be adapted to be translated into a physical layout design, which may be utilizable, as known in the art, for fabricating an IC. In the context of the present invention, the fabricated IC may be adapted to approximate an output value of the mathematical function, as described herein.

The preceding figures illustrate various aspects of approximation systems and methods, including LUT structures, segment organization, and approximation techniques. In some embodiments, the LUT, or at least parts thereof, and additionally, or alternatively, polynomial processing elements, are repeatedly reconfigured during operation of a system, for example system 10 (of Fig. 2). This dynamic, iterative adaptation enables the system to maintain approximation accuracy and efficiency as operational parameters change over time. To do so, in some embodiments system 10 further implements the following optional method.

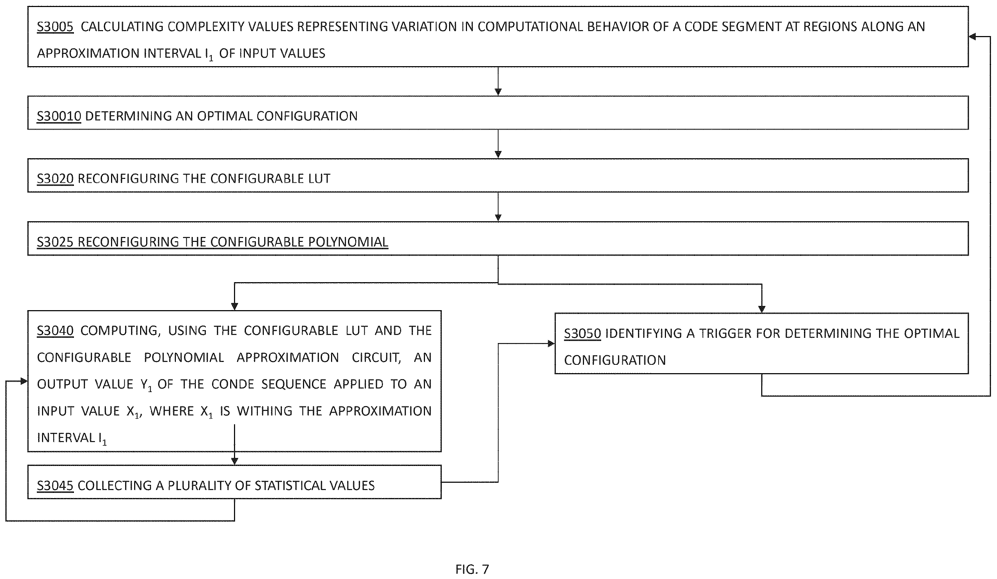

Reference is now made also to FIG. 7, which illustrates stages for executing computer instructions, including repeatedly determining an optimal configuration for computing an outcome of computing a code sequence implementing a plurality of computer instructions, according to some embodiments of the invention. In such embodiments, the at least one processor 100 executes a plurality of optimization iterations. In each optimization iteration of the plurality of optimization iterations, as shown in step S3005 at least one processor 100 may calculate complexity values, for example including complexity value 312. The approximation interval I₁ may be an approximation interval of input values of the code sequence. The complexity values may represent variation in computational behavior of the code sequence at regions along the approximation interval I₁.

As shown in step S3010, the at least one processor 100 may determine, in each of the plurality of optimization iterations, the optimal configuration 30CNF. The optimal configuration may include one or more of: a number of entries of the LUT(s) 140, lengths of the plurality of unique segments 141, or polynomial values of the polynomial approximation function 130P. Some examples of a polynomial value include a degree of a polynomial function and a coefficient of the polynomial function. The optimal configuration 30CNF may be based on the complexity values, and additionally, or alternatively, on one or more computational resource constraints, for example computational requirement 30CR.

As shown in S3020, in each of the plurality of optimization iterations the at least one processor 100 may reconfigure LUT(s) 140, to implement the optimal configuration 30CNF. The at least one processor 100 may modify circuit parameters to accommodate the determined segment lengths. Reconfiguring the LUT(s) 140 may include modifying a number of LUT entries associated with respective segments. When system 10 comprises a reconfigurable processing grid and when one or more of the LUT(s) 140 are implemented in the reconfigurable processing grid, modifying the number or LUT entries may comprise manipulating at least some of the plurality of reconfigurable elements of the reconfigurable processing grid, and additionally, or alternatively, manipulating at least some of the plurality of reconfigurable data routing junctions of the reconfigurable processing grid.

As shown in S3025, in each of the plurality of optimization iterations the at least one processor 100 may reconfigure the polynomial circuit(s) 130, to implement the optimal configuration 30CNF. Reconfiguring the polynomial circuit(s) 130 may include modifying a polynomial processing element of the polynomial circuit(s) 130. When system 10 comprises a reconfigurable processing grid and when one or more of the polynomial circuit(s) 130 are implemented in the reconfigurable processing grid, modifying the polynomial processing element may comprise manipulating at least some other of the plurality of reconfigurable elements of the reconfigurable processing grid, and additionally, or alternatively, manipulating at least some other of the plurality of reconfigurable data routing junctions of the reconfigurable processing grid.

After reconfiguring the configurable LUT(s) 140 and additionally or alternatively the polynomial circuit(s) 130, the at least one processor 100 may execute the plurality of computer instructions. Executing the plurality of computer instructions may comprise executing a plurality of computation iterations.

As shown in stem S3040, in each of the plurality of computation iterations the at least one processor 100 may compute, an output value Y₁ of the code sequence, when the code sequence is applied to an input value X₁. The input value X₁ may be within the approximation interval I₁. The at least one processor 100 may use the configurable LUT(s) 140, and additionally, or alternatively, the polynomial circuit(s) 130 to compute the output value Y₁.

When an LUT of LUT(s) 140 is implemented in the reconfigurable processing grid, computing the output value Y₁ may comprise accessing the LUT in the reconfigurable processing grid. Additionally, or alternatively, when a configurable polynomial approximation circuit of the polynomial circuit(s) 130 is implemented in the reconfigurable processing grid, computing the output value Y₁ may comprise accessing the configurable polynomial approximation circuit in the reconfigurable processing grid.

When a processor of the at least one processor 100 is implemented in the reconfigurable processing grid, computing the output value Y₁ may be by the processor implemented in the reconfigurable processing grid.

Computing the output value Y₁ may be by the method as described in Fig. 4 above.

As shown by step S3050, in each of the plurality of optimization iterations the at least one processor 100 may identify a trigger for determining the optimal configuration 30CNF. The trigger may include receiving a polynomial representation precision requirement for the approximation polynomial function 130P. Additionally, or alternatively, the trigger may include receiving a resource requirement. Additionally, or alternatively, the trigger may include identifying a change in a range of input values of the code sequence.

When identifying the trigger in one optimization iteration, the at least one processor 100 may end execution of the one optimization iteration and may initiate execution of another optimization iteration, to determine a new optimal configuration 30CNF by executing S3010 again in the other optimization iteration. The other optimization iteration may comprise executing S3005 again, in the other optimization iteration, to calculate new complexity values. The other optimization iteration may comprise executing S3020 again, in the other optimization iteration, to reconfigure the LUT(s) 140 and additionally or alternatively executing S3025 again, to reconfigure the polynomial circuit(s) 130. After executing again S3020 and additionally or alternatively S3025, the at least one processor 100 may continue executing the plurality of computation iterations, in the other optimization iteration.

As seen in step S3045, while executing the plurality of computation iterations, the at least one processor 100 may collect, in at least some of the plurality of computation iterations, a plurality of statistical values. The statistical values may include counters for each input value of the code sequence. The statistical values may include counters for ranges, or bins, of input values of the code sequence. Some other examples of a statistical value include, but are not limited to, a minimal input value, a maximal input value, and a frequency of a value exceeding an identified threshold. A value may exceed the identified threshold when the value is greater than the identified threshold. A value may exceed the identified threshold when the value is less than the identified threshold.

The at least one processor 100 may identify a change in the arbitrary interval I₀ of input values of the code sequence. This may be a trigger for determining an optimal configuration. When at least one processor identifies a change in the arbitrary interval I₀ of input values of the code sequence, at least one processor 100 my compute a new approximation interval I₁.

Embodiments of the invention may leverage the combination of Look-Up Table (LUT) based approximation and polynomial approximation, to achieve a balance between computational accuracy and resource efficiency in hardware implementations. This hybrid approach offers several benefits, that may be categorized as enhancement of accuracy, enhancement of computational resource efficiency, and practical application:

As explained herein, LUT-based methods provide precomputed values for specific points within the approximation interval. By subdividing the interval into small sub-segments, the LUT can store highly granular values, significantly reducing quantization errors. The minute size of sub-segments 141 allows embodiments of the invention to perform accurate polynomial approximation within each segment, ensuring high accuracy.

On the other hand, polynomial approximation, such as Taylor or Chebyshev polynomials, can provide a smooth and continuous approximation of the mathematical function within each sub-segment. The small size of the LUT 140 sub-segments 141 may allow embodiments of the invention to effectively use low-degree polynomials, as the function's behaviour within each sub-segment is less complex and more predictable.

Embodiments of the invention may combine LUT and Polynomial approximation such that LUT 140 provides a quick, coarse approximation, while the polynomial correction 130P refines this approximation, resulting in higher overall accuracy. This combination allows the system (e.g., 10, 20) to achieve high accuracy without requiring an excessively large LUT 140, as the polynomial correction compensates for the LUT's limitations.

A pure LUT-based approach with high granularity would require a large memory footprint to store all precomputed values. By combining LUT 140 with polynomial approximation 130P, Embodiments of the invention may reduce the need for a large LUT 140. The polynomial correction can handle finer details, allowing the LUT to be smaller and more manageable. Moreover, the use of small LUT sub-segments 141 allows for the use of low-degree polynomials 130P, which simplifies the polynomial calculations. Simpler calculations translate to lower computational overhead, conservation of hardware resources and improving efficiency and throughput.

Embodiments of the invention may allow for an optimized tradeoff between LUT size, polynomial degree, and overall accuracy. By adjusting the number of LUT entries and the degree of the polynomial, system 10/20 can be tailored to meet specific accuracy and resource constraints. This flexibility may ensure that the hardware implementation can be optimized for different applications, balancing accuracy of the implementation and resource consumption according to predetermined requirements.

Embodiments of the invention can be implemented in hardware, e.g., as one or more integrated circuits (ICs) that may include both LUT 140 and polynomial computation 320 circuits. This hardware solution may ensure fast and efficient computation, making it suitable for real-time applications.

IC(s) 10 can be designed to dynamically adjust the LUT 140 and polynomial 130 parameters, based on the input values and required accuracy, further enhancing efficiency.

Embodiments of the invention may also include a method for designing and generating such an IC 101, ensuring that the hardware is optimized for the specific mathematical functions and application requirements.

This design methodology may allow for the creation of custom ICs 10 that leverage the combined approximation methods, providing a tailored solution for various computational tasks.

In summary, the present invention's combination of LUT-based and polynomial approximation methods in hardware, and dynamic reconfiguration thereof throughout the lifetime of a system, may offer significant benefits in terms of accuracy and computational resource consumption. By leveraging the strengths of both approaches, and utilizing very small LUT sub-segments to enable accurate polynomial approximation with low-degree polynomials, embodiments of the invention may achieve high accuracy while minimizing memory usage and computational overhead. By reconfiguring the LUT and approximation polynomial, embodiments of the invention may achieve continuous high accuracy, over time as requirements change, while still minimizing memory usage and computational overhead. This makes it a practical and efficient solution for a wide range of applications.

Unless explicitly stated, the method embodiments described herein are not constrained to a particular order or sequence. Furthermore, all formulas described herein are intended as examples only and other or different formulas may be used. Additionally, some of the described method embodiments or elements thereof may occur or be performed at the same point in time.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A system for executing computer instructions, comprising:
a configurable lookup table (LUT);
a configurable polynomial approximation circuit; and
at least one processing circuitry, configured to:
in each of a plurality of optimization iterations:
calculate complexity values representing variation in computational behavior of a code sequence implementing a plurality of computer instructions at regions along an approximation interval I₁ of input values of the code sequence;
determine an optimal configuration that includes a number of entries of the LUT, lengths of a plurality of unique segments within the approximation interval I₁, and polynomial values of a polynomial approximation function, wherein the optimal configuration is based on the complexity values and at least one computational resource constraint and wherein the lengths of respective segments are determined such that segments in regions having higher complexity values have shorter lengths than respective segments in regions having lower complexity values;
reconfigure the configurable LUT and the configurable polynomial approximation circuit to implement the optimal configuration by modifying at least one of: a number of LUT entries associated with respective segments, and a polynomial processing element of the configurable polynomial approximation circuit; and
in each of a plurality of computation iterations when executing the plurality of computer instructions:
compute, using the configurable LUT and the configurable polynomial approximation circuit, an output value Y₁ of the code sequence applied to an input value X₁, wherein X₁ is within the approximation interval I₁.

2. The system of claim 1, wherein the at least one processing circuitry is further configured to, in each of the plurality of optimization iterations: identify a trigger for determining the optimal configuration.

3. The system of claim 2, wherein the trigger comprises at least one of:
identifying a change in a range of input values, receiving a polynomial representation precision requirement, receiving an accuracy requirement, and receiving a resource requirement.

4. The system of claim 1, wherein the at least one computational resource constraint defines limitations of at least one of logic area and memory area;
wherein at least one of:
a limitation of a logic area defines an amount of area of at least one of the configurable LUT and the configurable polynomial circuit; or
a limitation of a memory area defines an amount of memory used by at least one of: the configurable LUT, the configurable polynomial circuit, and the processing circuitry when computing the output value Y₁.

5. The system of claim 1, further comprising a reconfigurable processing grid comprising a plurality of reconfigurable logical elements connected by a plurality of reconfigurable data routing junctions;
wherein the configurable LUT is implemented in the reconfigurable processing grid;
wherein computing the output value Y₁ using the configurable LUT comprises accessing the configurable LUT in the reconfigurable processing grid; and
wherein modifying the number of LUT entries associated with respective segments comprises manipulating at least some of the plurality of reconfigurable logical elements and additionally or alternatively manipulating at least some of the plurality of reconfigurable data routing junctions.

6. The system of claim 1, further comprising a reconfigurable processing grid comprising a plurality of reconfigurable logical elements connected by a plurality of reconfigurable data routing junctions;
wherein the configurable polynomial approximation circuit is implemented in the reconfigurable processing grid;
wherein computing the output value Y₁ using the configurable polynomial approximation circuit comprises accessing the configurable polynomial approximation circuit in the reconfigurable processing grid; and
wherein modifying the polynomial processing element of the configurable polynomial approximation circuit comprises manipulating at least some other of the plurality of reconfigurable logical elements and additionally or alternatively manipulating at least some other of the plurality of reconfigurable data routing junctions.

7. The system of claim 1, further comprising a reconfigurable processing grid comprising a plurality of reconfigurable logical elements connected by a plurality of reconfigurable data routing junctions;
wherein one or more of the at least one processing circuitries are implemented in the reconfigurable processing grid; and
wherein computing the output value Y₁ is by the one or more processing circuitries implemented in the reconfigurable processing grid are configured.

8. The system of claim 1, wherein computing the output value Y₁ comprises:
obtaining from the plurality of computer instructions a query for computing the output value Y₁ for the given input value X₁;
selecting a segment of the plurality of segments based on the given input value X₁;
retrieving from the configurable LUT a preliminary approximation of the output value Y₁, based on said selection;
calculating an offset value of the given input value X₁ within the selected segment;
applying at least one polynomial using the configurable polynomial approximation circuit on the offset value, to obtain a correction value; and
computing the output value Y₁ based on the preliminary approximation and the correction value.

9. The system of claim 8, wherein the at least one polynomial comprises a first polynomial, pertaining to a first reference segment and a second polynomial, pertaining to a second reference segment, and wherein the at least one processing circuitry is further configured to:
calculate a first similarity value, representing similarity in behavior between the selected segment and the first reference segment;
calculate a second similarity value, representing similarity in behavior between the selected segment and the second reference segment;
choose a reference segment based on the first similarity value and the second similarity value; and
calculate the correction value based on the polynomial pertaining to the chosen reference segment.

10. The system of claim 1, wherein a length of at least one first segment of the plurality of unique segments and a length of at least one second segment of the plurality of unique segments are different.

11. The system of claim 1, wherein determining the optimal configuration further comprises:
receiving at least one accuracy requirement, defining a maximal value of an error metric for approximating an outcome of executing the code sequence;
receiving at least one resource requirement, defining a constraint of computational resource in approximating the outcome of executing the code sequence;
determining the number of entries of the LUT based on the at least one accuracy requirement and the at least one resource requirement; and
calculating, for each entry of the LUT, a value of output Y₁ for the corresponding segment.

12. The system of claim 1, wherein the complexity values represent at least some of curvature, rapid changes, and inflection points of the computational behavior of the code sequence, and wherein the determined segment lengths achieve equal distribution of approximation error across all segments.

13. The system of claim 1, further comprising:
receiving an accuracy requirement, defining a maximal value of an error metric for approximating an outcome of executing the code sequence on input values within a reference segment;
based on the accuracy requirement, determining a minimal degree of the polynomial; and
applying an iterative process to calculate the polynomial, where each iteration includes: (i) calculating the polynomial's error in approximating the outcome of executing the code sequence on input values within the reference segment, and (ii) increasing the polynomial degree until the polynomial's approximation error satisfies the accuracy requirement.

14. A method for executing computer instructions, comprising:
in each of a plurality of optimization iterations:
calculating complexity values representing variation in computational behavior of a code sequence implementing a plurality of computer instructions at regions along an approximation interval I₁ of input values of the code sequence;
determining an optimal configuration that includes a number of entries of a configurable look-up table (LUT), lengths of a plurality of segments within the approximation interval I₁, and polynomial values of a polynomial approximation function, wherein the optimal configuration is based on the complexity values and at least one computational resource constraint and wherein the lengths of respective segments are determined such that segments in regions having higher complexity values have shorter lengths than respective segments in regions having lower complexity values;
reconfiguring the configurable LUT and a configurable polynomial approximation circuit to implement the optimal configuration by modifying at least one of: a number of LUT entries associated with respective segments, and a polynomial processing element of the configurable polynomial approximation circuit; and
in each of a plurality of computation iterations when executing the plurality of computer instructions:
computing, using the configurable LUT and the configurable polynomial approximation circuit, an output value Y₁ of the code sequence applied to an input value X₁, wherein X₁ is within the approximation interval I₁.

15. A device for executing computer instructions, comprising:
a configurable lookup table (LUT);
a configurable polynomial approximation circuit; and
at least one processing circuitry, configured to
in each of a plurality of optimization iterations:
calculate complexity values representing variation in computational behavior of a code sequence implementing a plurality of computer instructions at regions along an approximation interval I₁ of input values of the code sequence;
determine an optimal configuration that includes a number of entries of the LUT, lengths of a plurality of unique segments within the approximation interval I₁, and polynomial values of a polynomial approximation function, wherein the optimal configuration is based on the complexity values and at least one computational resource constraint and wherein the lengths of respective segments are determined such that segments in regions having higher complexity values have shorter lengths than respective segments in regions having lower complexity values;
reconfigure the configurable LUT and the configurable polynomial approximation circuit to implement the optimal configuration by modifying at least one of: a number of LUT entries associated with respective segments, and a polynomial processing element of the configurable polynomial approximation circuit; and
in each of a plurality of computation iterations when executing the plurality of computer instructions:
compute, using the configurable LUT and the configurable polynomial approximation circuit, an output value Y₁ of the code sequence applied to an input value X₁, wherein X₁ is within the approximation interval I₁.
